# EUROPÄISCHE PATENTSCHRIFT

(11) **EP 3 988 308 B1**
(45) Veröffentlichungstag und Bekanntmachung des Hinweises auf die Patenterteilung: **26.02.2025**
(21) Anmeldenummer: 21199429.8
(22) Anmeldetag: 28.09.2021
(51) Int. Cl.: B41F 13/08, B41F 33/00, B41F 5/24, G01B 11/24, G01B 11/30, B41F 13/34

(54) **VERFAHREN ZUM BETREIBEN EINER FLEXODRUCKMASCHINE, FLEXODRUCKMASCHINE UND SYSTEM**
METHOD FOR OPERATING A FLEXOGRAPHIC PRINTING MACHINE, FLEXOGRAPHIC PRINTING MACHINE AND SYSTEM
PROCÉDÉ DE FONCTIONNEMENT D'UNE MACHINE D'IMPRESSION FLEXOGRAPHIQUE, MACHINE D'IMPRESSION FLEXOGRAPHIQUE ET SYSTÈME

(30) Priorität: 22.10.2020 DE 102020213325
(43) Veröffentlichungstag der Anmeldung: 27.04.2022
(73) Patentinhaber: Heidelberger Druckmaschinen AG, 69115 Heidelberg (DE)
(72) Erfinder: Schwab, Werner, 92699 Bechtsrieth (DE)

(56) Entgegenhaltungen:
- US-A- 5 855 739
- US-A1- 2010 011 978
- US-A1- 2017 165 956
- US-B2- 10 632 737

## Beschreibung

### Erfindung

Die Erfindung betrifft ein Verfahren mit den Merkmalen des Oberbegriffs von Anspruch 1. Die Erfindung betrifft weiterhin eine Flexodruckmaschine, wobei die Flexodruckmaschine zum Bedrucken eines Bedruckstoffs mit Flexodruckfarbe nach einem erfindungsgemäßen Verfahren betrieben wird, mit den Merkmalen des Oberbegriffs von Anspruch 10.

Die Erfindung betrifft weiterhin ein System aus einer erfindungsgemäßen Flexodruckmaschine und einer Messeinrichtung zum Messen der Punktdichte der Flexodruckform mit den Merkmalen des Oberbegriffs von Anspruch 13.

### Gebiet der Technik

Die Erfindung liegt auf dem technischen Gebiet der grafischen Industrie und dort insbesondere im Bereich des Betreibens einer Flexodruckmaschine, d.h. einer Rotationsdruckmaschine für das Drucken mit Flexodruckformen. Im Besonderen liegt die Erfindung dabei auf dem Teilgebiet des Steuerns oder Regelns der Maschine bzw. deren Antrieben und/oder Stellantrieben zum Vermeiden oder Reduzieren von Störungen.

### Stand der Technik

Im sogenannten Flexodruck, insbesondere beim industriellen, bahnverarbeitenden Flexodruck, besteht die Anforderung, mit von Druckauftrag zu Druckauftrag verschiedenen Flexodruckformen bei hohen Geschwindigkeiten kosteneffizient zu drucken und hierzu die anfallende Makulatur gering und die Druckqualität hoch zu halten.

Druckzylinder, insbesondere solche mit (hinsichtlich der Flexoplatten-Anzahl/-Kosten) bevorzugt geringem Umfang, neigen zu störenden Schwingungen.

Wechselnde Druckaufträge mit verschiedenen Druckformen bzw. verschiedenen Druckmotiven können dabei Probleme bereiten: die Druckmotive können Stellen aufweisen, an denen viel gedruckt wird, und Stellen, an denen wenig gedruckt wird; und Stellen, an denen gar nicht oder nur unwesentlich gedruckt wird ("Kanäle"). Solche Kanäle können sich in einer Druckform in Umfangsrichtung oder - was meist schlimmer ist - in axialer Richtung erstrecken. Bei Drucken mit mehreren Druckformen können solche Kanäle auch zwischen den beabstandet montierten Druckformen liegen. Diese Kanäle (bzw. von diesen verursachten Schlägen beim Durchlauf durch den Druckspalt) können bei bestimmten Produktionsgeschwindigkeiten zu Schwingungen von Zylindern, Druckwerken oder der Maschine führen.

Im Stand der Technik wurden bislang so genannte Stützstreifen in die Kanäle eingefügt oder beim Drucken mit mehreren Druckformen wurde diese so angeordnet, dass keine oder möglichst geringe und in Bezug auf störende Schwingungen unkritische Kanäle entstehen (so genanntes "stagging").

Flexodruckformen können vor dem Drucken, z.B. in einer Messstation vermessen werden. Die nachveröffentlichte DE102020111341A1 offenbart eine Vorrichtung zum Vermessen von Erhebungen der Oberfläche eines Rotationskörpers und schafft eine Verbesserung, welche es insbesondere ermöglicht, Erhebungen von Rotationskörpern, wie z.B. Flexo-Druckpunkte einer Flexo-Druckplatte, schnell und hochgenau zu vermessen. Die in dem Dokument offenbarte Vorrichtung zum Vermessen von Erhebungen der Oberfläche eines als Zylinder, Walze, Hülse oder Platte einer Druckmaschine ausgebildeten Rotationskörpers, z.B. einer auf einer Hülse montierten Flexo-Druckplatte, mit einem ersten Motor zum Rotieren des Rotationskörpers um eine Rotationsachse und mit einer Messeinrichtung, zeichnet sich dadurch aus, dass die Messeinrichtung zum berührungslosen Vermessen wenigstens eine Strahlungsquelle und wenigstens eine Flächenkamera umfasst.

Die in dem vorgenannten Dokument zitierten und beschriebenen, weiteren Dokumente DE3302798A1, DE102014215648A1, EP3251850, DE102006060464A1, WO2010146040A1, WO2008049510A1 und das dort beschriebene System "smartGPS^{®}" der Firma Bobst bilden weiteren Stand der Technik. Ebenso das System "ARun" der Firma Allstein.

Beim Betreiben von bahnverarbeitenden Rotationsdruckmaschinen können die Druckqualität verringernde Störungen auftreten, beispielsweise so genanntes "Bouncing" beim Flexodruck. Dieses wird z.B. durch Schwingungen von Druckzylindern hervorgerufen. Die Schwingungen wiederum können durch das Druckbild bzw. die Anordnung von druckenden und nichtdruckenden Stellen der Flexodruckformen hervorgerufen werden.

Eine bekannte, aber nicht zufriedenstellende Maßnahme zum Vermeiden von "Bouncing" ist, das Druckbild durch zusätzliche - eigentlich nicht gewünschte - druckende oder nichtdruckende Stellen zu verändern. Eine weitere bekannte aber ebenfalls nicht zufriedenstellende - weil zu viel Makulatur erzeugende - Maßnahme ist, die Druckgeschwindigkeit zu ändern, da das "Bouncing" nur bei bestimmten Druckgeschwindigkeiten infolge von Resonanzen auftritt. Solche Änderungen nimmt üblicherweise ein Maschinenbediener vor.

Die DE102005012915A1 offenbart: Bei einem Verfahren zum Betrieb einer Maschine mit zumindest einem rotierenden Bauteil mit einer angestrebten Solldrehzahl wird zunächst die angestrebte Solldrehzahl auf eine im Hinblick auf Schwingungsresonanzen kritische Solldrehzahl hin überprüft und ggf. als solche erkannt. Bei positivem Ergebnis wird die Maschine gezielt nicht stationär mit dieser kritischen Solldrehzahl, sondern mit einer von dieser kritischen Solldrehzahl um einen Drehzahlbetrag stationär beabstandeten oder um diese kritische Solldrehzahl oszillierende Drehzahl betrieben. Es kann dabei ein Schwingungen erkennenden Sensor, z.B. an einem Zylinderzapfen der Maschine, zum Einsatz kommen.

Die nachveröffentlichte EP3838595A1 offenbart ein Verfahren zum Betreiben einer Rotationsdruckmaschine, wobei Störungen eines rotierenden Druckzylinders erfasst und durch Ändern der Druckgeschwindigkeit reduziert werden. Die Störungen werden an einem Stellantrieb des Druckzylinders erfasst.

Die EP2956304B 1 offenbart ebenfalls eine Lösung, um "Bouncing" zu reduzieren: abgeschrägte Kanten.

Die US2010011978A1 offenbart eine Regelung der Geschwindigkeit des Druckzylinders in Abhängigkeit einer Topographie, allerdings wird ein Anpressdruck nicht in Abhängigkeit eines Profils bzw. einer Punktedichte der Druckform bestimmt.

Die US10632737B2 offenbart eine Vorrichtung für den Flexodruck einer Verpackungsmaterialbahn mit Druckfarbe und ein Einlaufmodul für eine Flexodruckvorrichtung. Die Vorrichtung kann eine Farbkammer und eine mindestens teilweise innerhalb der Farbkammer rotierende Anilox-Walze zum Aufnehmen und Übertragen von Druckfarbe aus der Farbkammer zu einem Druckzylinder umfassen, der sich in Übertragungskontakt mit der Anilox-Walze dreht.

Die US2017165956A1 offenbart ein Druckwerk für eine Flexodruckmaschine, umfassend - einen ein Klischee mit einem Klischee-Referenzfeld, welches eine Mehrzahl von Referenzfeldflächen unterschiedlicher Höhe aufweist, tragenden Plattenzylinder, - einen Gegendruckzylinder, dessen Abstand zum Plattenzylinder zum Zwecke einer Anpressung eines Bedruckstoffs an das Klischee von einer Steuereinheit gesteuert variierbar ist, - eine Färbewalze, deren Abstand zum Klischee zum Zwecke dessen Einfärbung von der Steuereinheit gesteuert variierbar und deren Oberfläche mit Farbe aus einem angeschlossenen Farbreservoir benetzbar ist, - einen mit der Steuereinheit verbundenen, ersten Sensor zur Erfassung einer Qualität eines Druckbildes des Klischee-Referenzfeldes auf dem Bedruckstoff und - einen mit der Steuereinheit verbundenen, zweiten Sensor zur Erfassung einer Qualität eines Negativbildes des Klischee-Referenzfeldes auf der Färbewalze.

Die US5855739 offenbart eine nassgepresste Papierbahn. Die vorliegende Erfindung stellt auch ein Verfahren zur Herstellung einer nassgepressten Bahn bereit.

Hülsen werden meist erst kurz vor dem Drucken mit Flexodruckplatten bestückt (Montage).

Eine Anbindung der Druckstufe ("press") an die Druckvorstufe ("prepress") ist im Flexodruck deutlich weniger ausgeprägt als beispielsweise im Offsetdruck: JDF oder XJDF als Schnittstelle zwischen Vorstufe und Druckstufe ist nicht etabliert. Vorstufendaten stehen daher in der Druckerei meist nicht zur Verfügung. Oftmals findet die Vorstufe, insbesondere das Belichten der Flexodruckformen, sogar in einem anderen Betrieb statt.

### Technische Aufgabe

Es ist eine Aufgabe der vorliegenden Erfindung, eine Verbesserung gegenüber dem Stand der Technik zu schaffen, welche es insbesondere ermöglicht, im industriellen Flexodruck kosteneffizient und hochqualitativ zu drucken, wobei störende Schwingungen vermieden werden.

### Erfindungsgemäße Lösung der Aufgabe

Diese Aufgabe wird erfindungsgemäß durch ein Verfahren nach Anspruch 1, eine Flexodruckmaschine nach Anspruch 10, und ein System nach Anspruch 13 gelöst. Vorteilhafte und daher bevorzugte Weiterbildungen der Erfindung ergeben sich aus den Unteransprüchen sowie aus der Beschreibung und den Zeichnungen.

Ein erfindungsgemäßes Verfahren zum Betreiben einer Flexodruckmaschine mit wenigstens einer Flexodruckform, mit einem eine Hülse für die Flexodruckform tragenden Druckzylinder oder mit einem Flexodruckzylinder für die Flexodruckform und mit einem Gegendruckzylinder, welcher einen Druckspalt mit dem Druckzylinder oder dem Flexodruckzylinder bildet, wobei eine Bahn aus Bedruckstoff im Druckspalt bedruckt und eine Transportgeschwindigkeit der Bahn eingestellt wird, zeichnet sich dadurch aus, dass das Einstellen automatisch entweder in Abhängigkeit von einer Punktdichte der Flexodruckform, oder daraus rechentechnisch abgeleiteter Daten, erfolgt oder in Abhängigkeit von Kanälen der Flexodruckform, des Druckzylinders oder des Flexodruckzylinders, oder daraus rechentechnisch abgeleiteter Daten, erfolgt, wobei die Punktdichte eine ortsabhängige Dichte von druckenden Erhebungen der Flexodruckform ist, und wobei die Punktdichte oder die Kanäle berührungslos gemessen wird/werden oder wobei die Punktdichte aus Vorstufendaten zur Herstellung der Flexodruckform rechentechnisch ermittelt wird.

Eine erfindungsgemäße Flexodruckmaschine, mit wenigstens einem Flexodruckwerk und mit wenigstens einer Flexodruckform, umfassend einen eine Hülse für die Flexodruckform tragenden Druckzylinder oder einen Flexodruckzylinder für die Flexodruckform, einen Gegendruckzylinder , welcher einen Druckspalt mit dem Druckzylinder oder dem Flexodruckzylinder bildet, und eine Rasterwalze, wobei die Flexodruckmaschine zum Bedrucken eines Bedruckstoffs mit Flexodruckfarbe nach einem der vorhergehenden Verfahren betrieben wird, zeichnet sich dadurch aus, dass die Flexodruckmaschine wenigstens einen Antriebsmotor für das rotative Antreiben des Druckzylinders, des Flexodruckzylinders, des Gegendruckzylinders und/oder einer Rasterwalze umfasst und einen Antriebsmotor für das Fördern der Bahn umfasst und dass der Antriebsmotor rechentechnisch unter Verwendung der Punktdichte, oder daraus abgeleiteter Daten, oder in Abhängigkeit der Kanäle, oder daraus rechentechnisch abgeleiteter Daten, derart gesteuert oder geregt wird, dass die Transportgeschwindigkeit der Bahn einen vorgegebenen Wert oder einen vorgegebenen Wertebereich aufweist oder dass die Transportgeschwindigkeit der Bahn einen vorgegebenen Wert oder einen vorgegebenen Wertebereich ausschließt.

Ein erfindungsgemäßes System aus einer Flexodruckmaschine und einer Messeinrichtung zum Messen der Punktdichte der Flexodruckform, zeichnet sich dadurch aus, dass die Messeinrichtung die Punktdichte der Flexodruckform misst oder Kanäle der Flexodruckform, des Druckzylinders oder des Flexodruckzylinders misst und dass die Messeinrichtung die Punktdichte oder die Kanäle, oder daraus rechentechnisch abgeleitete Daten, an die Flexodruckmaschine übermittelt.

### Vorteilhafte Ausbildungen und Wirkungen der Erfindung

Die Erfindung ermöglicht es in vorteilhafter Weise, im industriellen Flexodruck kosteneffizient und hochqualitativ zu drucken, wobei störende Schwingungen vermieden werden. Das erfindungsgemäße Verfahren ermöglicht es in vorteilhafter Weise zudem, das Drucken weiter zu automatisieren.

Die Druckmotive können Stellen aufweisen, an denen viel gedruckt wird, und Stellen, an denen wenig gedruckt wird; und Stellen, an denen gar nicht oder nur unwesentlich gedruckt wird (im Folgenden "Kanäle" genannt). Solche Kanäle können sich in einer Druckform in Umfangsrichtung oder - was meist schlimmer ist - in axialer Richtung erstrecken. Bei Drucken mit mehreren Druckformen können solche Kanäle auch zwischen den beabstandet montierten Druckformen liegen. In Kanälen befinden sich insbesondere keine druckenden Erhebungen, d.h. die Punktdichte hat dort den Wert Null.

Der Begriff "Kanal" soll in dieser Anmeldung wie folgt verstanden werden: eine druckfreie oder im Wesentlichen druckfreie Stelle eines Druckbildes einer Flexodruckform oder eine druckfreie oder im Wesentlichen druckfreie Stelle zwischen zwei Flexodruckformen auf einer gemeinsamen Hülse; die Stelle erstreckt sich in axialer Richtung (in Bezug auf eine Rotationsachse eines Flexodruckzylinders) und senkrecht dazu in Umfangrichtung (in Bezug auf die Umfangsrichtung eines Flexodruckzylinders); die Stelle kann sich in axialer Richtung über die gesamte Länge einer Flexodruckform erstrecken, muss aber nicht; die Stelle erstreckt sich in axialer Richtung wenigstens mit einer Länge L > 200 mm oder L > 300 mm oder bevorzugt L > 400 mm; die Stelle erstreckt sich in Umfangsrichtung wenigstens mit einer Breite B > 3 mm oder bevorzugt > 5 mm; die Stelle hat in axialer Richtung keine ihr nachfolgende druckende Stelle mit einer Länge 1 > 10 mm oder 1 > 20 mm oder bevorzugt 1 > 30 mm.

Der Begriff "Kanalmuster" soll in dieser Anmeldung wie folgt verstanden werden: Das geometrische Muster wenigstens zweier Kanäle einer Flexodruckform oder wenigstens zweier Flexodruckformen; insbesondere die x-y-Position der Kanäle und deren Länge L und Breite B.

Die Erfindung wird für eine Flexodruckmaschine bzw. für Flexodruckformen (Hochdruck) beschrieben und gezeigt. Alternativ kann die Erfindung für gravierte Druckformen oder gravierten Hülsen eingesetzt werden (Tiefdruck). Statt des Begriffs "Flexo-" kann in dieser Anmeldung daher alternativ "Tief-" oder "Flexo- oder Tief-" verwendet werden. Statt "Hülse mit Flexodruckform" kann "Hülse mit gravierter Form" oder "gravierte Hülse" bzw. "Laser gravierte Hülse" oder "mit Laser gravierte Endloshülse" oder "endlose Druckform" oder "endlos Druckhülse" verwendet werden.

### Weiterbildungen der Erfindung

Im Folgenden werden bevorzugte Weiterbildung der Erfindung (kurz: Weiterbildungen) beschrieben.

Eine jeweilige Weiterbildung des erfindungsgemäßen Verfahrens kann sich dadurch auszeichnen:
- dass das Messen der Punktdichte der Flexodruckform mit von Tastrollen verschiedenen Mitteln durchgeführt wird.
- dass die Punktdichte der Flexodruckform vor dem Drucken gemessen wird.
- dass die Punktdichte der Flexodruckform vor dem Drucken in einer Messeinrichtung gemessen wird.
- dass die Messeinrichtung einen Aufnahmezylinder für die Flexodruckform oder für eine Hülse mit der Flexodruckform umfasst.
- dass der Aufnahmezylinder während des Messens um eine - eine axiale Richtung aufweisenden - Rotationsachse rotiert.
- dass die Messeinrichtung außerhalb der Flexodruckmaschine betrieben wird.
- dass das Messen unter Einsatz eines Topografen erfolgt.
- dass beim Messen eine Kamera zum Einsatz kommt.
- dass beim Messen eine Flächenkamera zum Einsatz kommt.
- dass beim Messen eine Zeilenkamera zum Einsatz kommt.
- dass in der Kamera wenigstens ein CIS-Sensor zum Einsatz kommt.
- dass beim Messen eine ortsfeste Kamera zum Einsatz kommt.
- dass die Kamera vor dem Messen senkrecht zur axialen Richtung bewegt wird.
- dass die Kamera während des Messens in axialer Richtung bewegt wird.
- dass beim Messen mit der Kamera eine Strahlungsquelle, insbesondere eine Lichtquelle zum Einsatz kommt.
- dass beim Messen das gesamte Druckbild einer Flexodruckform oder des Druckzylinders erfasst wird.
- dass beim Messen wenigstens eine Flexodruckform oder wenigstens zwei Flexodruckformen auf einer Hülse montiert und erfasst wird/werden.
- dass beim Messen die gesamte Hülse, d.h. deren Mantelfläche mit montierten Flexodruckformen, erfasst wird.
- dass beim Messen Licht von einer Lichtquelle bis zu Erhebungen der Flexodruckform und von dort zur Kamera gelangt.
- dass beim Messen mit der Kamera wenigstens ein Spiegel zum Einsatz kommt.
- dass der Spiegel beweglich angeordnet ist.
- dass der Spiegel vor dem Messen senkrecht zur axialen Richtung bewegt wird.
- dass der Spiegel während des Messens in axialer Richtung bewegt wird.
- dass beim Messen Licht von einer Lichtquelle bis zu Erhebungen der Flexodruckform und von dort über den Spiegel zurück zur Kamera gelangt.
- dass beim Messen ein Laser und ein Triangulationsmessverfahren zum Einsatz kommen.
- dass die Punktdichte aus Vorstufendaten zur Herstellung der Flexodruckform rechentechnisch ermittelt wird.
- dass eine Berechnung von Einstellwerten erfolgt.
- dass die Einstellwerte an eine Steuerung eines Motors für das rotative Antreiben des Druckzylinders und/oder des Gegendruckzylinders und/oder einer Rasterwalze und/oder an eine Steuerung eines Motors für das Fördern der Bahn übermittelt wird.
- dass das Berechnen in Abhängigkeit einer Punktdichte der Flexodruckform, d.h. einer ortsabhängigen Dichte von druckenden Erhebungen der Flexodruckform, - oder daraus rechentechnisch abgeleiteter Daten - oder in Abhängigkeit von Kanälen der Flexodruckform oder des Druckzylinders - oder daraus rechentechnisch abgeleiteter Daten erfolgt.
- dass bei der Berechnung der Einstellwerte verschiedene Drehzahlen des Druckzylinders verwendet werden.
- dass bei der Berechnung der Einstellwerte verschiedene Oberflächengeschwindigkeiten der Flexodruckform bei verschiedenen Drehzahlen berechnet werden.
- dass bei der Berechnung der Oberflächengeschwindigkeiten verschiedene axiale Dicken von Flexodruckformen und/oder von Hülsen verwendet werden.
- dass bei der Berechnung der Einstellwerte verschiedene Frequenzen für Kanalschläge bei verschiedenen Oberflächengeschwindigkeiten berechnet werden.
- dass bei der Berechnung der Einstellwerte wenigstens eine Frequenz für einen Kanalschlag oder ein Kanalschlagmuster mehrerer Kanäle einer Flexodruckform oder mehrerer Flexodruckformen bei verschiedenen Oberflächengeschwindigkeiten berechnet werden.
- dass bei der Berechnung der Einstellwerte gemessene und/oder vorgegebenen Resonanzfrequenzen des Druckzylinders und/oder des Gegendruckzylinders und/oder von Komponenten der Flexodruckmaschine und/oder von Druckwerken der Flexodruckmaschine und/oder von der Flexodruckmaschine verwendet oder ausgeschlossen werden.
- dass die vorgegeben Resonanzfrequenzen digital gespeichert sind und abgerufen werden.
- dass die vorgegeben Resonanzfrequenzen zuvor sensorisch ermittelt werden.
- dass das sensorische Ermitteln unter Einsatz wenigstens eines Sensors an einem Stellantrieb für einen Anstelldruck zwischen Flexodruckzylinder und Gegendruckzylinder erfolgt.
- dass für Resonanzen kritische Zylinderdrehzahlen ermittelt werden.
- dass beim Betrieb der Flexodruckmaschine mit einer oder mehreren zuvor vermessenen Flexodruckform bzw. Flexodruckformen solche Drehzahlen des Druckzylinders vermieden oder beim Ändern der Drehzahl überfahren (Wahl einer höheren Drehzahl als die kritische Drehzahl) oder unterfahren (Wahl einer niedrigeren Drehzahl als die kritische Drehzahl) werden, welche infolge wenigstens eines Kanalschlages oder Kanalschlagmusters eines Kanals oder mehrerer Kanäle die Druckqualität störende Resonanzschwingungen erzeugen.
- dass beim Betrieb einer Flexodruckmaschine mit mehreren Druckwerken mit jeweils einer oder mehreren zuvor vermessenen Flexodruckform bzw. Flexodruckformen solche Drehzahlen der Druckzylinder der Druckwerke vermieden oder beim Ändern der Drehzahl überfahren (Wahl einer höheren Drehzahl als die kritische Drehzahl) oder unterfahren (Wahl einer niedrigeren Drehzahl als die kritische Drehzahl) werden, welche infolge wenigstens eines jeweiligen Kanalschlages oder Kanalschlagmusters eines Kanals oder mehrerer Kanäle die Druckqualität störende Resonanzschwingungen erzeugen.
- dass beim Vermeiden der Drehzahlen ein Drehzahlabstand zu einer resonanten Drehzahl von wenigstens 3 m/min oder von wenigstens 4 m/min eingehalten wird.
- dass bei der Berechnung ein Rechner, d.h. ein Digitalrechner, zum Einsatz kommt.
- dass dem Rechner die Punktdichte oder die daraus abgeleiteten Daten übermittelt wird bzw. werden.
- dass die Flexodruckmaschine eine Rasterwalze zum Einfärben der Flexodruckform umfasst.
- dass ein berechneter Sollwert des Einstellwerts mit einem erfassten Istwert des Einstellwerts beim störungsfreien Drucken verglichen wird und dass aus dem Vergleich eine Abweichung des Sollwerts vom Istwert rechentechnisch ermittelt wird und dass rechentechnisch ein Korrekturwert ermittelt wird.
- dass verschiedene Korrekturwerte beim Drucken mit verschiedenen Flexodruckformen einer Anzahl von Flexodruckformen ermittelt und gespeichert werden.
- dass eine KI mit den gespeicherten Korrekturwerten rechentechnischen Lernschritte durchläuft und dass die KI vor dem Drucken mit einer weiteren - zur Anzahl der Flexodruckformen verschiedenen - Flexodruckform einen Korrekturwert für die Flexodruckform ermittelt und dieser Korrekturwert bei dem Drucken verwendet wird.
- dass für Resonanzen kritische, also zu vermeidende, Zylinderdrehzahlen als Sollwerte ermittelt werden und dass Zylinderdrehzahlen, bei welchen im Maschinenbetrieb tatsächlich Resonanzen auftreten, als Istwerte - bevorzugt automatisch - messtechnisch erfasst werden (z.B. mit einem Verfahren wie in der nachveröffentlichten EP3838595A1 offenbart) und dass beide Werte rechentechnisch verglichen werden. Aus einer Mehrzahl solcher Vergleiche und den dabei gegebenenfalls festgestellten Abweichungen der Istwerte von den Sollwerten kann ein Rechner oder eine KI lernen und künftige Sollwerte entsprechend korrigieren bzw. "besser vorhersagen". Störende Resonanzen können auf diese Weise noch besser verhindert werden. Alternativ kann eine sogenannte Look-Up-Table zum Einsatz kommen, welche bevorzugt Informationen zu Änderungen der für Resonanzen kritischen, also zu vermeidenden, Zylinderdrehzahlen in Abhängigkeit von Änderungen an der Maschine, wie z.B. wechselnden Hülsen bzw. Hülsendurchmesser/-umfängen, enthält.

Eine jeweilige Weiterbildung der erfindungsgemäßen Flexodruckmaschine kann sich dadurch auszeichnen:
- dass der Antriebsmotor rechentechnisch unter Verwendung der Punktdichte oder daraus abgeleiteter Daten oder in Abhängigkeit von Kanälen der Flexodruckform oder des Druckzylinders - oder daraus rechentechnisch abgeleiteter Daten derart gesteuert oder geregt wird, dass die Transportgeschwindigkeit der Bahn einen vorgegebenen Wert oder einen vorgegebene Wertebereich aufweist oder dass die Transportgeschwindigkeit der Bahn einen vorgegebenen Wert oder einen vorgegebene Wertebereich ausschließt.
- dass beim Betrieb der Flexodruckmaschine Papier, Karton, Pappe, die jeweils auch beschichtet sein können, Folie oder Verbundmaterial bedruckt wird.
- dass die Flexodruckform wenigstens einen Kanal aufweist.
- dass die Hülse wenigstens zwei Flexodruckformen mit gleichen oder unterschiedlichen Druckmotiven trägt.
- dass die zwei Flexodruckformen auf der Hülse in Umfangsrichtung aufeinanderfolgend oder in axialer Richtung aufeinanderfolgend montiert sind.
- dass wenigstens eine Flexodruckform wenigstens einen Kanal aufweist und/oder dass zwischen den Flexodruckformen ein Kanal gebildet ist.

Eine jeweilige Weiterbildung des erfindungsgemäßen Systems kann sich dadurch auszeichnen:
- dass die Messeinrichtung Teil einer Messstation ist, welche separat zur Flexodruckmaschine angeordnet ist.
- dass die Flexodruckform und/oder die Hülse mit einer maschinenlesbaren ID markiert ist.
- dass die ID als eindeutiger Identifikator für die Hülse ausgebildet ist.
- dass der Identifikator mehrere Zeichen, insbesondere Ziffern und/oder Buschstaben, umfasst.
- dass die ID als ein eindimensionaler Code markiert ist, insbesondere ein Barcode, oder als ein zweidimensionaler Code markiert ist, insbesondere ein QR-Code, oder als ein RFID-Chip oder NFC-Chip markiert ist.
- dass die Messeinrichtung die Punktdichte oder daraus abgeleitete Daten oder die Kanäle der Flexodruckform oder des Druckzylinders - oder daraus rechentechnisch abgeleiteter Daten - zusammen mit der ID direkt an die Flexodruckmaschine übermittelt.
- dass die Messeinrichtung die Punktdichte oder daraus abgeleitete Daten oder die Kanäle der Flexodruckform oder des Druckzylinders - oder daraus rechentechnisch abgeleiteter Daten - zusammen mit der ID indirekt an die Flexodruckmaschine übermittelt, indem die Punktdichte oder die daraus abgeleitete Daten zwischengespeichert und von der Flexodruckmaschine für das Drucken mit der Flexodruckform und/oder der Hülse abgerufen werden.
- dass die abgeleiteten Daten wenigstens ein Kanalmuster oder eine zu einem Kanalmuster korrespondierende Frequenz umfassen.
- dass das Zwischenspeichern auf einem zentralen Speicher oder einem Cloud-Speicher erfolgt.

Eine jeweilige Weiterbildung der erfindungsgemäßen Flexodruckform oder Hülse für eine Flexodruckform kann sich dadurch auszeichnen:
- dass die Markierung mit der maschinenlesbaren ID unter Einsatz eines Markierungsmittels erfolgt, welches von einem RFID-Chip verschieden ist.

Die in den obigen Abschnitten Technisches Gebiet, Erfindung und Weiterbildungen sowie im folgenden Abschnitt Ausführungsbeispiele offenbarten Merkmale und Merkmalskombinationen stellen - in beliebiger Kombination miteinander - weitere vorteilhafte Weiterbildungen der Erfindung dar.

### Ausführungsbeispiele zur Erfindung und Figuren

Die Figuren 1 bis 5 zeigen eine Flexodruckmaschine, eine Messstation mit einer Messeinrichtung (verschiedene Ausführungsformen) und ein Messverfahren.

Die Figur 6 zeigt das erfasste Bild einer Hülse mit beispielhaft zwei Flexodruckformen.

Einander entsprechende Merkmale sind in den Figuren mit denselben Bezugszeichen versehen. Sich in den Figuren wiederholende Bezugszeichen wurden der Übersichtlichkeit teils weggelassen.

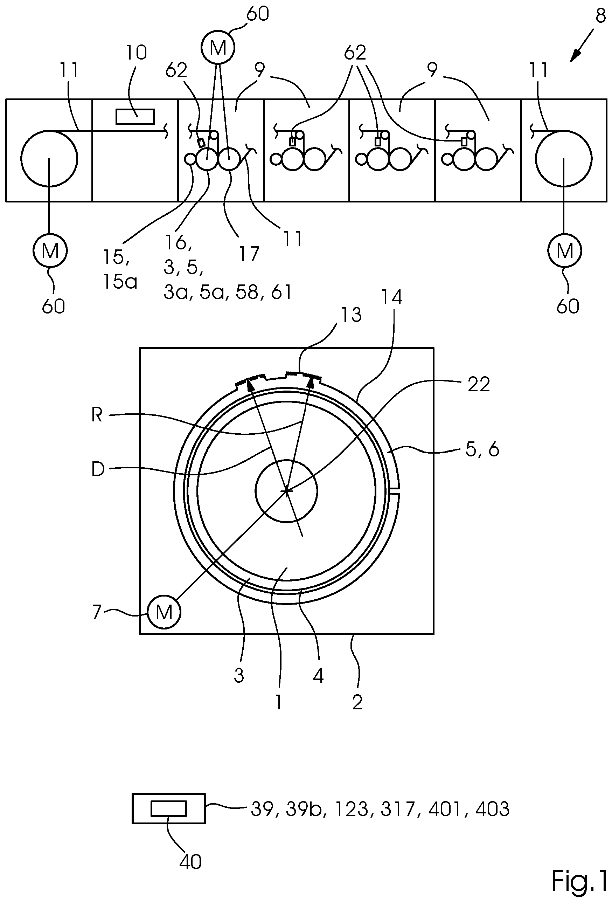

Figur 1 zeigt einen Querschnitt eines rotierbaren Trägerzylinders 1 einer Messstation 2, einer auf dem Trägerzylinder aufgenommenen Hülse 3 und einer auf der Hülse aufgenommenen, bevorzugt mittels eines Klebebands 4 (oder alternativ mittels einer Klebebeschichtung der Hülse) an der Hülse befestigten (so genanntes "Montieren"), zumindest hinsichtlich ihrer Topografie zu vermessenden Druckplatte 5 (Flexodruckform) als Rotationskörper 6. Alternativ kann eine selbstklebende Hülse zum Einsatz kommen.

Zum Rotieren des Trägerzylinders während des Messens kann in der Messstation ein Motor 7 vorhanden sein. Die Messstation kann Teil eines sogenannten "mounter" (in dem Druckplatten auf Trägerhülsen montiert werden) sein oder kann separat zu einem "mounter" vorgesehen sein. Die Messstation kann separat zu einer Druckmaschine 8 (Flexodruckmaschine) - mit wenigstens einem Druckwerk 9 (Flexodruckwerk) für die Druckplatte 5 und einem Trockner 10 zum Bedrucken und Trocknen eines bevorzugt bahnförmigen Bedruckstoffs 11 (alternativ: bogenförmig) - vorgesehen sein. Die Druckplatte ist bevorzugt eine Flexodruckform mit einem Durchmesser von 106 mm bis 340 mm. Der Trockner ist bevorzugt ein Heißlufttrockner und/oder ein UV-Trockner und/oder eine Elektronenstrahl-Trockner und/oder ein IR-Trockner. Die Hülse kann seitlich auf den Trägerzylinder aufgeschoben werden. Der Trägerzylinder kann Öffnungen in seiner Mantelfläche aufweisen, aus welchen - zum Weiten der Hülse und zum Erzeugen eines Luftkissens beim Aufschieben - Druckluft ausgestoßen werden kann. Die Hülse mit der Druckplatte kann nach dem Messen aus dem Messgerät entnommen und in der Druckmaschine auf einen Druckzylinder des Druckwerks aufgeschoben werden. Alternativ zum Pneumatik-Spannsystem kann auch ein Hydraulik-Spannsystem verwendet werden.

Eine Kalibration der Messstation 2 kann unter Zuhilfenahme von Messringen 12 am Trägerzylinder 1 erfolgen. Alternativ kann eine Messhülse oder der Trägerzylinder selbst zur Kalibration verwendet werden.

Figur 1 zeigt zudem einen digitalen Rechner und/oder digitalen Speicher 39, 39b, 123, 317, 401 und/oder 403. Die Messeinrichtung kann Daten erzeugen und an den Rechner/Speicher übertragen. Die Daten können Messwerte oder daraus abgeleitete Daten sein, welche beim Vermessen der Hülse 3 und/oder der Flexodruckform(en) 5 generiert werden. Der Rechner/Speicher kann Teil der Messeinrichtung 2 oder Teil der Flexodruckmaschine 8 sein; oder kann separat vorgesehen sein, z.B. als zentraler Rechner/Speicher (etwa einer Druckerei) oder Cloud-basiert. Der Rechner/Speicher kann Daten an die Flexodruckmaschine übertragen, z.B. die Messwerte oder die daraus abgeleitete Daten oder daraus weiter abgeleitete Daten. Die weiter abgeleiteten Daten können von einem rechnerimplementierten Algorithmus und/oder einer KI (Künstliche Intelligenz; Software- und/oder Hardware-basiertes, selbst und maschinell lernendes System) erzeugt sein. Der Rechner/Speicher kann Daten von mehreren Messstationen erhalten und Daten an mehrere Flexodruckmaschinen übertragen oder von mehreren Flexodruckmaschinen empfangen. Das System aus Flexodruckmaschine(n), Messstation(en) und Rechner/Speicher erlaubt eine hohe Automatisierung beim Drucken bis hin zum autonomen Drucken; fehlerträchtige Eingaben und/oder Änderungen von Daten seitens des Bedieners können auf diese vorteilhafte Weise vermieden werden.

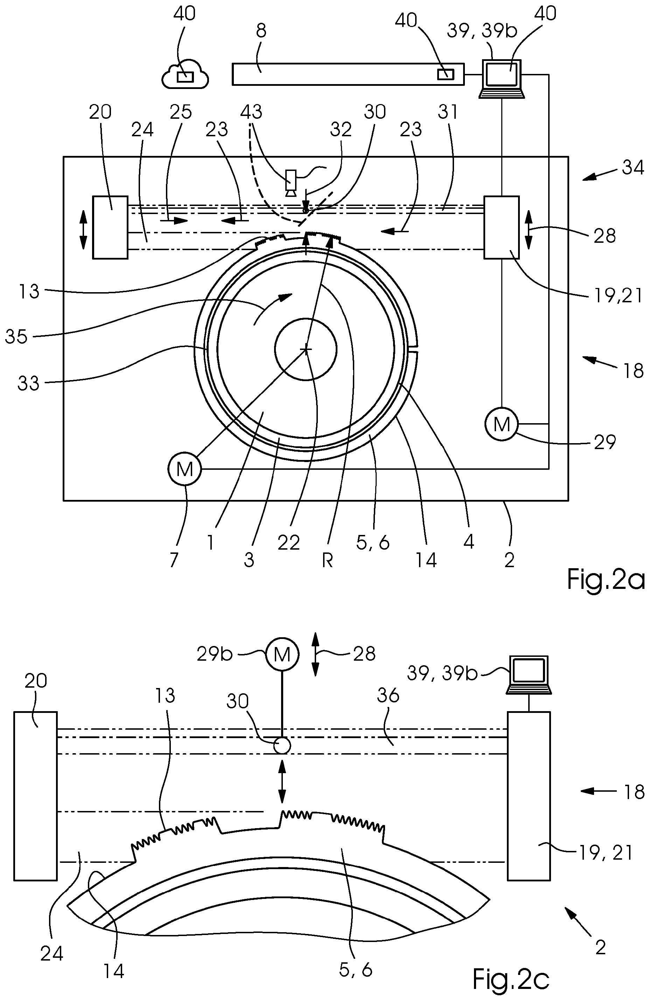

Die nachfolgenden Figuren zeigen bevorzugte Ausführungsformen von Vorrichtungen zum berührungslosen Vermessen von Erhebungen 13 der Oberfläche 14 eines als Flexodruckform der Druckmaschine 8 ausgebildeten Rotationskörpers 6 (vgl. Figur 2C). Die Erhebungen können Flexo-Druckpunkte (im Raster) oder Flexo-Druckflächen (in der Vollfläche) einer Flexo-Druckplatte sein. In den folgenden Ausführungsbeispielen wird beispielhaft das Vermessen einer Druckplatte 5 beschrieben. Durch das Vermessen der Druckplatte wird ein automatisches Voreinstellen des jeweiligen optimalen Arbeitsdrucks zwischen den am Druckprozess beteiligten Zylindern, z.B. Rasterzylinder 15, Druckzylinder 16 mit Druckplatte 5 und Gegendruckzylinder17, ermöglicht.

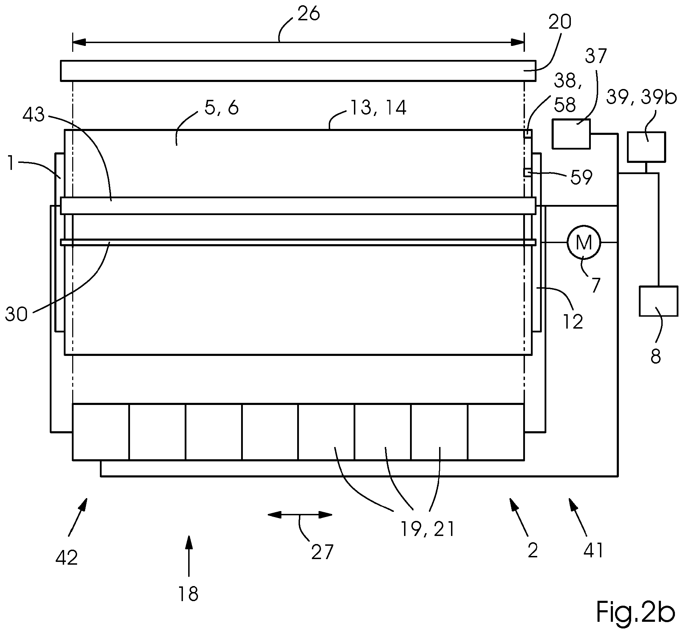

Die Figuren 2A bis 2C zeigen eine bevorzugte Ausführungsform der Vorrichtung zum Vermessen der Topografie einer Druckplatte 5; Figur 2A im Querschnitt, Figur 2B in der Draufsicht und Figur 2C einen vergrößerten Ausschnitt aus Figur 2A. Gemäß dieser Ausführungsform wird die Topografie bevorzugt mit mehreren Einrichtungen 18 im Rahmen einer 3D-Radius-Ermittlung mit einer optionalen Referenzlinie erfasst.

In dieser und den folgenden Ausführungsformen meint "2D", dass ein Abschnitt der Druckplatte 5 (z.B. ringförmiges Höhenprofil) gescannt wird und "3D", dass die gesamte Druckplatte 5 (z.B. zylinderförmiges Höhenprofil, aus ringförmigen Höhenprofilen zusammengesetzt) gescannt wird.

Die Vorrichtung umfasst mehrere Strahlungsquellen 19, insbesondere Lichtquellen19, bevorzugt LED-Lichtquellen, wenigstens einen Reflektor 20, z.B. einen Spiegel, und wenigstens einen Lichtempfänger 21, bevorzugt eine Flächenkamera und besonders bevorzugt eine Hochgeschwindigkeitskamera. Im Folgenden wird beispielhaft von Lichtquellen als den Strahlungsquellen ausgegangen, d.h. es wird sichtbares Licht ausgesendet. Alternativ kann die Strahlungsquelle andere elektromagnetische Strahlung aussenden, z.B. Infrarot. Die Lichtquellen sind bevorzugt in einer Reihe senkrecht zur Rotationsachse 22 des Trägerzylinders 1 angeordnet und erzeugen einen Lichtvorhang 23, wobei der Trägerzylinder 1 mit Hülse 3 und Druckplatte 5, d.h. die Kontur, eine Abschattung 24 erzeugen. Das reflektierte und dann empfangene Licht 25, also im Wesentlichen das ausgesendete Licht 23 ohne das von der Topografie 13 abgeschattete Licht 24, trägt Informationen über die zu vermessende Topografie 13. Der Reflektor 20 kann als eine reflektierende Folie ausgebildet sein. Die Information kann z.B. eine Information der Flexoform über druckende oder nicht druckende Bereiche bzw. deren Höhe sein oder eine Information der Flexoform über deren lokale Punktdichte sein.

Die Lichtquelle 19 ist flächenförmig (Flächenkamera). Die Lichtquelle sendet bevorzugt sichtbares Licht aus. Bevorzugt decken die Lichtquellen 19 und -empfänger 21 die Arbeitsbreite 26, d.h. die Ausdehnung der Druckplatte 5 in Richtung seiner Achse 22 (z.B. 1650 mm), ab. Es können bevorzugt n Lichtquellen 19 und -empfänger 21 vorgesehen sein, wobei z.B. 2>n>69. Bei Einsatz von Kameras geringerer Größe kann eine höhere Obergrenze als 69 erforderlich sein. Wird die gesamte Arbeitsbreite 26 abgedeckt, so kann die Druckplatte 5 während einer Umdrehung des Trägerzylinders 1 vermessen werden. Andernfalls müssen die Lichtquellen und Lichtempfänger in axialer Richtung 27 entlang der Druckplatte bewegt oder getaktet werden.

Bevorzugt kommen günstige aber schnell arbeitende Kameras 21 zum Einsatz, z.B. Schwarz-Weiß-Kameras. Die Kameras können während der Rotation der Druckplatte 5 einzelne Bilder aufnehmen oder einen Film.

Die Einrichtung aus Lichtquellen 19, Reflektor 20 und Lichtempfänger 21 kann bevorzugt in eine Richtung 28 senkrecht zur Achse 22 des Trägerzylinders 1 bewegt werden, um den erzeugten Lichtstreifen 23 auf die zu vermessende Topografie 13 zu richten. Hierzu kann ein Motor 29 vorhanden sein. Es kann auch vorgesehen sein, den Reflektor ortsfest auszubilden und nur die Lichtquelle und/oder den Lichtempfänger zu bewegen, z.B. motorisch zu verfahren.

Entgegen der Darstellung erfolgt das Vermessen der Topografie 13 bevorzugt in senkrechter (z.B. Kamera "unten" und Reflektor "oben") und nicht in waagrechter Richtung, da in diesem Fall eine mögliche Durchbiegung des Trägerzylinders 1 und des Referenzobjekts 30 unberücksichtigt bleiben kann. Man muss sich bei dieser bevorzugten Lösung die Figur 2a um 90° im Uhrzeigersinn gedreht vorstellen.

Als optionales Referenzobjekt 30 ist ein linienartiges Objekt 30, bevorzugt ein gespannter Faden 30 oder eine gespannte Saite 30, z.B. ein Metalldraht oder eine Carbonfaser oder ein Messer (oder ein messerartiges Objekt oder ein Objekt mit einer Schneide) oder ein Balken., vorgesehen, welches eine Referenzlinie 31 für die Mehrzahl von Lichtempfängern 21 erzeugt. Das linienartige Objekt erstreckt sich bevorzugt parallel zur Achse des Trägerzylinders 1 und ist in geringem Abstand 32, z.B. 2 mm bis 10 mm (maximal bis 20 mm), zu dessen Mantelfläche 33 bzw. der darauf angeordneten Druckplatte 5 angeordnet. Das empfangene Licht 25 enthält auch auswertbare Informationen über das Referenzobjekt 30, z.B. dessen Ort und/oder Abstand zur (bevorzugt geätzten und daher tiefer als die Erhebungen 13 liegenden) Oberfläche 14 der Druckplatte 5. Mittels der Referenzlinie kann der radiale Abstand R der Topografie 13 bzw. der Kontur oder der Konturerhebungen zum Referenzobjekt 30, bevorzugt unter Einsatz von digitaler Bildverarbeitung, bestimmt werden. Der Abstand des Referenzobjekts 30 von der Achse 22 des Trägerzylinders 1 ist durch die Anordnung und/oder motorische Verstellung des Referenzobjekts 30 (optional gemeinsam mit Lichtquelle 19 und Lichtempfänger 21 und ggf. Reflektor 20) bekannt. Somit kann rechentechnisch der radiale Abstand der Konturerhebungen, d.h. der Radius R der Druckpunkte, bestimmt werden. Durch den Einsatz des Referenzobjekts 30 und somit dem Vorhandensein einer von ihm hervorgerufenen Abschattung bzw. einer zur Abschattung korrespondierenden Referenzlinie 31 (im aufgenommenen Bild bzw. aus dem empfangenen Licht) einer jeden Kamera 21 ist eine exakte, z.B. pixelgenaue Ausrichtung der Kameras zueinander nicht zwingend erforderlich. Ferner kann das Referenzobjekt 30 zur Kalibrierung des Messsystems genutzt werden.

Das Referenzobjekt 30 kann zur Bewegung bzw. Verstellung in Richtung 28 mit der Lichtquelle 19 und/oder dem Motor 29 gekoppelt sein. Alternativ kann das Referenzobjekt einen eigenen Motor 29b für das Bewegen/Verstellen aufweisen.

Zum initialen Referenzieren der Vorrichtung wird bevorzugt eine Messung mit dem ("leeren") Trägerzylinder oder einer darauf angeordneten Messhülse durchgeführt (Messung Abstand Referenzobjekt zu Oberfläche von AS nach BS). AS und BS sind Abkürzungen für die Bezeichnungen Antriebseite bzw. Bedienseite einer Maschine, z.B. einer Druckmaschine, in welcher die Hülse zum Einsatz kommen soll. Sowohl diese Bezeichnungen als auch deren Abkürzungen sind in der grafischen Industrie üblich und dem Fachmann daher geläufig.

Zum weiteren Initialisieren der Vorrichtung vor dem Messvorgang wird bevorzugt zunächst die Flächenkamera 21 in Richtung 28 zum Trägerzylinder 1 hinbewegt. Die Bewegung wird bevorzugt gestoppt, sobald die Kamera bevorzugt die erste Erhebung detektiert. Danach wird das Referenzobjekt 30 bevorzugt ebenfalls in Richtung 28 bis auf einen vorgegebenen Abstand, z.B. 2 mm, zum Trägerzylinder 1 hinbewegt.

Lichtquelle 19 und Lichtempfänger 21 können alternativ auch auf gegenüberliegenden Seiten des Trägerzylinders 1 angeordnet sein; in diesem Fall kann auf den Reflektor 20 verzichtet werden.

Bevorzugt bilden die Lichtquelle 19, der Reflektor 20 (sofern gemäß Ausführungsform vorhanden), der Lichtempfänger 21 und das optionale Referenzobjekt 30 eine (senkrecht zur Achse 22 des Trägerzylinders) bewegbare, insbesondere motorisch verstellbare oder verfahrbare Einheit 34.

Während des Messens rotiert der Trägerzylinder 1 mit der darauf befindlichen Druckplatte 5, so dass bevorzugt alle Erhebungen 13 in Umfangsrichtung 35 erfasst werden können. Daraus lässt sich in Abhängigkeit der Winkelposition des Trägerzylinders 1 ein Topografie-Bild und der Radius R einzelner Erhebungen 13, z.B. Flexodruckpunkte, zur Achse 22 oder der Durchmesser D (gemessen zwischen sich gegenüberliegenden Erhebungen) ermitteln.

In der vergrößerten Darstellung der Figur 2C ist ein Ausschnitt der Topografie 13 der Druckplatte 5 gezeigt und es ist die Abschattung 24 der Topografie und die Abschattung 36 des Referenzobjekts 30 erkennbar. Die Topografie-Erhebungen 13 können im Bereich von 2 µm bis 20 mm liegen.

Es kann weiterhin ein Sensor 37 vorgesehen sein, welcher die Hülse 3 und/oder die Druckplatte 5 anhand eines Identifikationsmerkmals 38 (vgl. Figur 2B) erfasst. Dieses Merkmal kann z.B. ein Barcode, ein 2D-Code (z.B. QR-Code oder Datamatrixcode), ein RFID-Chip oder ein NFC-Chip sein.

Die von den Lichtempfängern 21 erzeugten Signale und/oder Daten, welche Informationen über die Topografie 13 der vermessenen Oberfläche 14 und über das Referenzobjekt 30 umfassen, werden an einen Rechner 39 übertragen, bevorzugt über eine Leitung oder über Funkverbindung, und dort weiterverarbeitet. Der Rechner steht mit der Druckmaschine 8 in Verbindung. Der Rechner 39 wertet die Informationen aus.

Das Referenzobjekt 30 kann vor der Messung in den Erfassungsbereich des Lichtempfängers 21 gebracht werden, um so den Lichtempfänger zu kalibrieren. Der Lichtempfänger 21 erfasst das Referenzobjekt und überträgt die erzeugten Signale der Kalibration auf den Rechner 39. Die Daten der Kalibration werden in den digitalen Speicher 40 des Rechners 39 erfasst.

Damit ist es möglich eine virtuelles Referenzobjekt im Rechner 39 zu hinterlegen. Anschließend wird das Referenzobjekt 30 aus dem Erfassungsbereich des Lichtempfängers 21 entfernt und die Topografie 39 der vermessenden Oberfläche 14 zusammen mit den virtuelle Referenzobjekt weiterverarbeitet.

Das Ergebnis der Auswertung wird in einem digitalen Speicher 40 des Rechners, in einem Speicher 40 der Druckmaschine oder in einen Cloud-basierten Speicher abgelegt. Die Ergebnisse werden bevorzugt dem jeweiligen Identifikationsmerkmal 38 zugeordnet abgespeichert. Bei der späteren Verwendung der auf einer Hülse montierten Druckplatte 5 (oder der Hülse/Flexodruckform) in der Druckmaschine 8 kann das Identifikationsmerkmal 38 der Druckplatte 5 bzw. der der Flexodruckform (oder der Hülse) erneut eingelesen werden. Dann können die zum Identifikationsmerkmal 38 gespeicherten Werte, z.B. zum Zwecke der Voreinstellung, abgerufen werden. Es kann z.B. vorgesehen sein, dass die Druckmaschine benötigte Daten für einen Druckauftrag aus dem Cloud-basierten Speicher erhält.

Das Ergebnis der Auswertung kann bevorzugt bis zu vier Werte umfassen: Die betriebsmäßig erforderlichen Druckzustellungen des Druckzylinders 16, d.h. des die vermessene Druckplatte 5 tragenden Zylinders auf den beiden Seiten 41 bzw. AS (Antriebsseite) und 42 bzw. BS (Bedienseite) gegen den Gegendruckzylinder 17 oder Bedruckstoff-Transportzylinder 17 und die betriebsmäßig erforderlichen Druckzustellungen einer die vermessene Druckplatte 5 einfärbenden Rasterwalze 15 auf den beiden Seiten 41 bzw. AS (Antriebsseite) und 42 bzw. BS (Bedienseite) gegen den Druckzylinder 16.

Weiterhin kann eine Einrichtung 43 zum Erfassen der Punktdichte, z.B. über eine optische Abtastung, vorgesehen sein, bevorzugt eine CIS-Scannerleiste (Contact Image Sensor), eine Zeilenkamera, oder eine Lasertriangulations-Einrichtung. Alternativ kann die Einrichtung 43 ein schwenkbarer oder bewegbarer Spiegel sein, derart, dass dieser zusammen mit den Lichtquellen 19, 21 zur Messung der Punktdichte genutzt werden kann. Die Einrichtung ist bevorzugt mit einer Einrichtung zur Bildverarbeitung und/oder Bildauswertung verbunden, welche bevorzugt der Rechner 39 - bzw. der Rechner 39 mit einer entsprechenden Programmierung - ist oder welche ein weiterer Rechner 39b sein kann.

Eine CIS-Scannerleiste kann achsparallel zum Zylinder angeordnet sein. Sie umfasst bevorzugt LEDs zur Beleuchtung und Sensoren zur Bildaufnahme (ähnlich einer Scannerleiste in einem handelsüblichen Kopierer). Die Leiste ist bevorzugt in einem Abstand von 1 bis 2 cm zur Oberfläche angeordnet oder wird auf diesen Abstand positioniert. Der Zylinder mit der zu vermessenden Oberfläche, z.B. der Druckplatte, rotiert unter der Leiste, die dabei ein Bild der Oberfläche erzeugt und einer Bildauswertung für eine Punktdichte-Auswertung zur Verfügung stellt. Die aus dem Erfassen der Punktdichte gewonnenen Daten können z.B. auch verwendet werden, um aus einer Menge von bereitstehenden Rasterwalzen eine - für das Drucken mit der erfassten Druckform optimale - Rasterwalze rechentechnisch auszuwählen bzw. zu empfehlen.

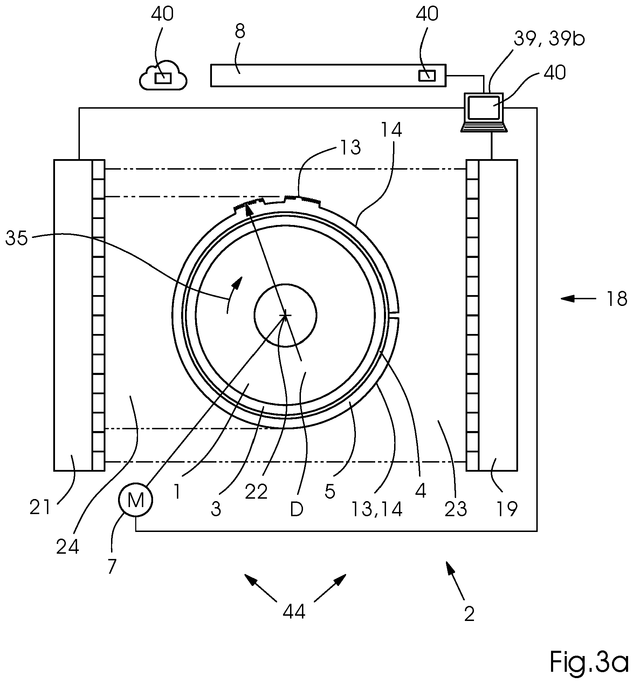

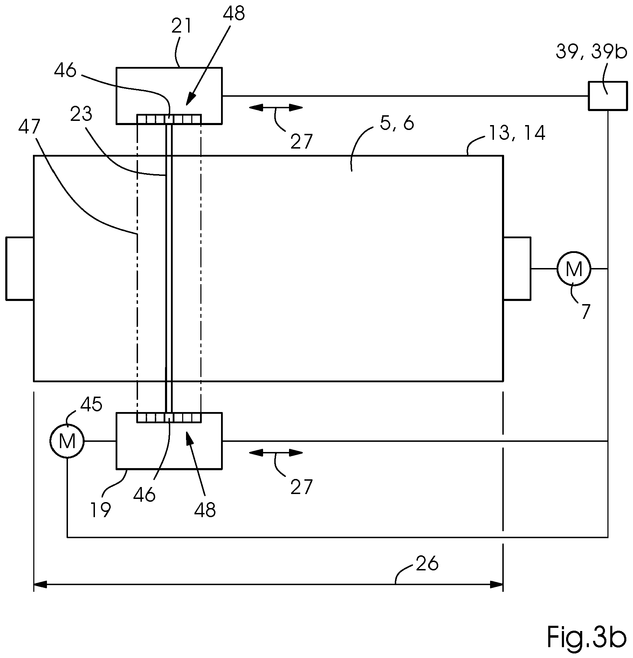

Die Figuren 3A und 3B zeigen eine bevorzugte Ausführungsform der Vorrichtung zum Vermessen der Topografie einer Druckplatte 5; Figur 3A im Querschnitt und Figur 3B in der Draufsicht. Gemäß dieser Ausführungsform wird die Topografie bevorzugt mit einem Lasermikrometer 44 im Rahmen einer 2D-Durchmesser-Ermittlung erfasst.

Die Vorrichtung umfasst eine Lichtquelle 19, bevorzugt eine zeilenförmige LED-Lichtquelle 19 oder einen zeilenförmigen Laser 19, und einen Lichtempfänger 21, bevorzugt eine Zeilenkamera 21. Laser und Lichtempfänger bilden gemeinsam einen Lasermikrometer 44. Die Lichtquelle 19 erzeugt einen Lichtvorhang 23 und der Trägerzylinder 1 mit Hülse 3 und Druckplatte 5 erzeugt eine Abschattung 24. Die Zeilen-Längen der Lichtquelle 19 und der Lichtempfänger 21 sind bevorzugt größer als der Durchmesser D des Trägerzylinders samt Hülse und Druckplatte, um die Topografie ohne ein Bewegen der Einrichtung 44 senkrecht zur Achse 22 des Trägerzylinders zu ermöglichen. Mit anderen Worten: der Querschnitt des Trägerzylinders befindet sich vollständig im Lichtvorhang.

Die Einrichtung 44 aus Lichtquelle 19 und Lichtempfänger 21 kann parallel zur Achse 22 des Trägerzylinders bewegt werden (in Richtung 27), um die gesamte Arbeitsbreite 26 zu erfassen. Hierzu kann ein Motor 45 vorhanden sein.

Es kann ein Sensor 37 vorgesehen sein, welcher die Hülse 3 und/oder die Druckplatte 5 anhand eines Identifikationsmerkmals 38 erfasst (vgl. Figur 2B).

Die von den Lichtempfängern 21 erzeugten Signale und/oder Daten werden an einen Rechner 39 übertragen, bevorzugt über eine Leitung oder über Funkverbindung, und dort weiterverarbeitet. Der Rechner steht mit der Druckmaschine 8 in Verbindung.

Lichtquelle 19 und Lichtempfänger 21 können alternativ auch auf derselben Seite des Trägerzylinders 1 angeordnet sein; in diesem Fall wird gegenüber ein Reflektor 20 ähnlich wie in den Figuren 2A bis 2C angeordnet.

Gemäß einer alternativen Ausführungsform wird die Topografie bevorzugt mit einem Lasermikrometer 44 im Rahmen einer 2D-Durchmesser-Ermittlung erfasst, wobei nicht nur eine einzelne Messzeile 46, sondern ein breiterer (gestrichelt dargestellter) Messtreifen 47 aus mehreren (gestrichelt dargestellten) Messzeilen 48 erfasst werden. Lichtquelle 19 und Lichtempfänger 21 sind in diesem Ausführungsbeispiel bevorzugt flächig und nicht bloß zeilenförmig ausgebildet. Die Lichtquelle 19 kann mehrere Lichtzeilen 48 von jeweils etwa 0,1 mm Breite und etwa 5 mm jeweiligen Abstands zueinander umfassen. Die Kamera ist in diesem Beispiel bevorzugt als Flächenkamera ausgebildet.

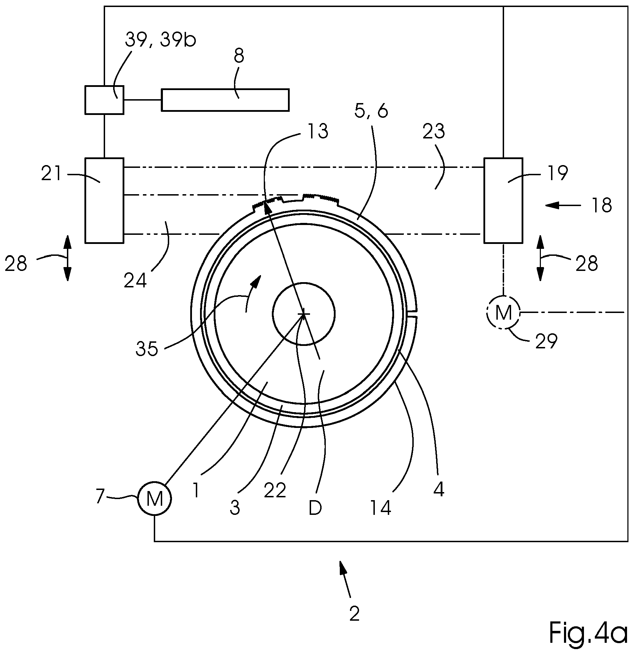

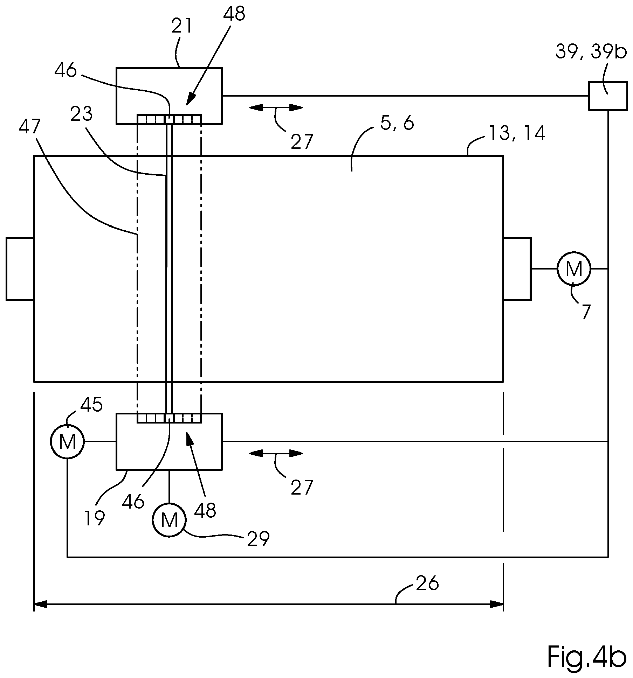

Die Figuren 4A und 4B zeigen eine bevorzugte Ausführungsform der Vorrichtung zum Vermessen der Topografie einer Druckplatte 5; Figur 4A im Querschnitt und Figur 4B in der Draufsicht. Gemäß dieser Ausführungsform wird die Topografie bevorzugt mit einem Lasermikrometer im Rahmen einer 2D-Radius-Ermittlung erfasst.

Die Vorrichtung umfasst eine Lichtquelle 19, bevorzugt eine LED-Lichtquelle 19, und einen Lichtempfänger 21, bevorzugt eine zeilenförmige LED-Lichtquelle 21 oder einen zeilenförmigen Laser 21. Die Lichtquelle 19 erzeugt einen Lichtvorhang 23 und der Trägerzylinder 1 mit Hülse 3 und Druckplatte 5 erzeugt eine Abschattung 24.

Die Einrichtung aus Lichtquelle 19 und Lichtempfänger 21 kann bevorzugt in eine Richtung 28 senkrecht zur Achse 22 des Trägerzylinders 1 bewegt werden, um den Lichtvorhang 23 auf die zu vermessende Topografie 13 zu richten. Hierzu kann ein Motor 29 vorhanden sein. Für den Fall, dass der Lichtvorhang 23 breit genug ist und daher den Messbereich abdeckt, kann auf den Motor 29 verzichtet werden.

Die von den Lichtempfängern 21 erzeugten Signale und/oder Daten werden an einen Rechner 39 übertragen, bevorzugt über eine Leitung oder über Funkverbindung, und dort weiterverarbeitet. Der Rechner steht mit der Druckmaschine 8 in Verbindung. Lichtquelle 19 und Lichtempfänger 21 können alternativ auch auf derselben Seite des Trägerzylinders angeordnet sein; in diesem Fall wird gegenüber ein Reflektor 20 ähnlich wie in den Figuren 2A bis 2C angeordnet.

Gemäß einer alternativen Ausführungsform wird die Topografie 13 bevorzugt mit einem Lasermikrometer 44 im Rahmen einer 3D-Radius-Ermittlung erfasst, wobei nicht nur eine Messzeile 46, sondern ein breiterer (gestrichelt dargestellter) Messtreifen 47, d.h. gleichzeitig mehrere Messzeilen 48, erfasst werden. Lichtquelle 19 und Lichtempfänger 21 sind in diesem Ausführungsbeispiel flächig und nicht bloß zeilenförmig ausgebildet.

Gemäß einer weiteren alternativen Ausführungsform wird die Topografie 13 bevorzugt mit einem Lasermikrometer 44 im Rahmen einer 3D-Radius-Ermittlung erfasst, wobei die Einrichtung aus Lichtquelle 19 und Lichtempfänger 21 bevorzugt in eine Richtung 28 senkrecht zur Achse des Trägerzylinders 1 bewegt werden kann, um den Lichtvorhang 23 auf die zu vermessende Topografie 13 zu richten. Hierzu kann ein (gestrichelt dargestellter) Motor 29 vorhanden sein.

Gemäß einer alternativen Ausführungsform wird die Topografie 13 bevorzugt mit einem Lasermikrometer 44 im Rahmen einer 3D-Radius-Ermittlung erfasst, wobei die beiden letztgenannten alternativen Ausführungsformen kombiniert werden.

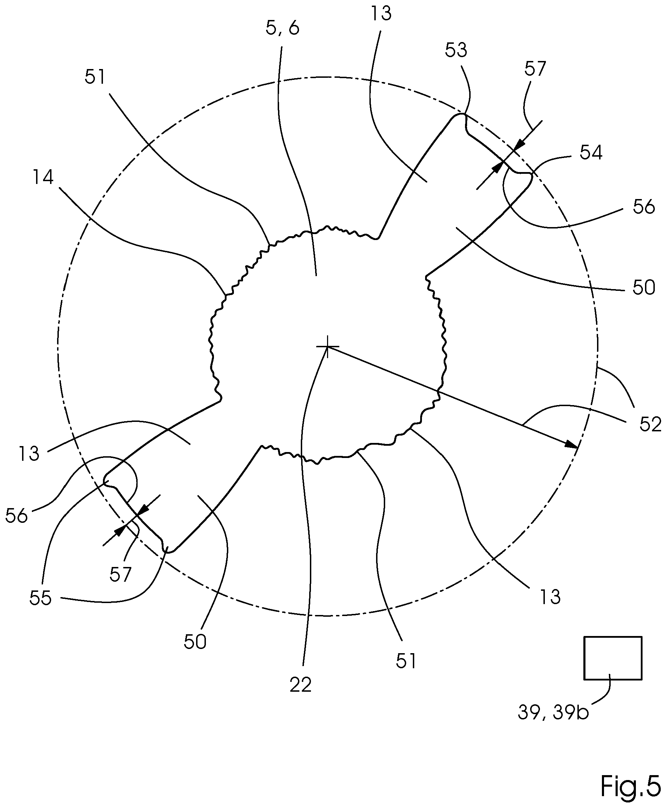

Figur 5 zeigt ein beispielhaftes und stark vergrößert dargestelltes Topografie-Messergebnis einer Druckplatte 5 (Flexodruckform) mit zwei druckenden Bereichen 50 und zwei nicht-druckenden Bereichen 51. Es sind die radialen Messergebnisse für 360° an einem axialen Ort (bezüglich der Achse des Trägerzylinders) gezeigt. Die nicht-druckenden Bereiche können z.B. durch Ätzen erzeugt worden sein und somit einen geringeren Radius als die druckenden Bereiche aufweisen.

In der Darstellung ist auch ein einhüllender Radius 52 bzw. eine Einhüllende 52 derjenigen Punkte der Druckplatte 5 mit dem größten Radius, d.h. den höchsten Erhebungen der Topografie 13 am axialen Ort, gezeigt.

Der Punkt 53 der Druckplatte 5 ist ein druckender Punkt, da dieser im Druckbetrieb bei normal eingestellter Pressung bzw. Druckzustellung zwischen Druckplatte 5 und Bedruckstoff 11 bzw. Transportzylinder 17 ausreichend Kontakt zum Bedruckstoff und zur farbübertragenden Rasterwalze hätte. Normal eingestellte Pressung erzeugt einen so genannten Kiss-Print, bei dem die Druckplatte den Bedruckstoff gerade berührt und bei dem die Flexodruckpunkte nicht wesentlich gequetscht werden.

Der Punkt 54 ist ein Punkt, welcher im Druckbetrieb bei normal eingestellter Pressung gerade noch drucken würde, da er gerade noch Kontakt zum Bedruckstoff hätte.

Die beiden Punkte 55 sind Punkte, die nicht drucken würden, da sie im Druckbetrieb bei normal eingestellter Pressung keinen Kontakt zum Bedruckstoff und auch nicht zur Rasterwalze hätten.

Auf dem Rechner 39 läuft ein Computerprogramm, welches im druckenden Bereich 50 rechentechnisch, z.B. unter Einsatz digitaler Bildverarbeitung, den radial tiefsten Punkt 56 und dessen radialen Abstand 57 zur Einhüllenden 52 ermittelt. Diese Berechnung wird in axialer Richtung in regelmäßigen Abständen durchgeführt, z.B. von AS nach BS an allen Messpunkten, und das jeweilige Maximum der tiefsten Punkte (d.h. der maximal tiefste Wert) von AS bis Mitte und von Mitte bis BS bestimmt. Die beiden Maxima oder daraus rechentechnisch bestimmte Zustellwerte oder Einstellwerte können z.B. als jeweilige Zustellung/Einstellung auf AS und BS beim Drucken gewählt werden, d.h. der Zylinderabstand zwischen den am Drucken beteiligten Zylindern wird um die Zustellung auf AS und BS verringert. Hierzu können aus AS und auf BS jeweils eine motorische Gewindespindel eingesetzt werden.

### Nachfolgend ein konkretes Zahlenbeispiel:

Auf der einen Seite ergibt sich als Abstand deltaR=65µm und auf der anderen als Abstand deltaR=55µm. Damit alle Punkte 53 bis 55 der Druckplatte drucken, müssen 65µm zugestellt werden.

In allen dargestellten Ausführungsformen und deren genannten Alternativen kann zusätzlich die herstellungsbedingte und/oder betriebsbedingte (durch Abnutzung bedingte) Rundlaufgenauigkeit der Hülse 3 vermessen werden und kann auf Basis der Mess- und Auswerteergebnisse beim Drucken zur Verbesserung der Qualität der erzeugten Druckprodukte berücksichtigt werden. Bei Überschreiten einer vorgegebenen Rundlauf-Toleranz kann eine Warnung ausgegeben werden. Das Messen kann bei glatten und bei porösen Hülsen durchgeführt werden.

Anstelle von Lichtquellen 19 bzw. Lichtstrahlern 19 (welche sichtbares Licht emittieren) können im Rahmen der Erfindung auch Radarstrahler 19 (mit entsprechend angepassten Empfängern) verwendet werden.

In allen dargestellten Ausführungsformen und deren genannten Alternativen können auch Parameter für eine dynamische Druckzustellung ermittelt und an die Druckmaschine übergeben werden. Dabei kann z.B. eine bekannte - (z.B. vorab gemessene) und dem Rechner 39 zur Verfügung stehende - verzögerte Ausdehnung der verformbaren und/oder komprimierbaren Druckpunkte 53 bis 55 aus Polymermaterial berücksichtigt werden. Oder es kann eine vorab mit einem Durometer ermittelte Härte der Druckplatte verwendet werden. Diese Ausdehnung kann insbesondere von der betriebsmäßig herrschenden Druckgeschwindigkeit abhängen bzw. diese Druckgeschwindigkeitsabhängigkeit kann berücksichtigt werden. Es kann z.B. bei höheren Druckgeschwindigkeiten eine höhere Druckbeistellung gewählt werden.

Dabei kann auch die Druckfläche der Druckplatte 5 oder die Punktdichte, d.h. die ortsveränderlichen Dichte der Druckpunkte auf der Druckplatte 5, (alternativ oder zusätzlich zur Druckgeschwindigkeit) berücksichtigt werden: Es kann z.B. bei höheren Punktdichten eine höhere Druckbeistellung gewählt werden und/oder die Punktdichte kann bei der Einstellung der dynamischen Druckbeistellung verwendet werden.

Zur Bestimmung der lokalen Punktdichte kann das empfangene Licht 25, also im Wesentlichen das ausgesendete Licht 23 ohne das von der Topografie 13 abgeschattete Licht 24 genutzt werden. Es trägt Informationen über die zu vermessende Topografie 13 und/oder deren Oberflächen-Punktdichte und/oder Erhebungen.

Hierzu kann ferner eine Einrichtung 43 zum Erfassen bzw. Messen der Punktdichte, d.h. deren lokale Werte, auf der Druckform, z.B. Flexodruckform, vorgesehen sein, bevorzugt eine CIS-Scannerleiste oder eine Zeilenkamera. Es kann z.B. vorgesehen sein, auf Basis der gewonnenen/berechneten Daten aus der Punktdichtermittlung Vorgabewerte für eine unterschiedliche Druckbeistellung auf AS (Antriebseite der Druckmaschine) und BS (Bedienseite der Druckmaschine) bereitzustellen.

In Kenntnis der Punktdichte der Druckplatte 5 und/oder der einfärbenden Rasterwalze 15 und/oder Rasterhülse 15 kann der zu erwartende Farbverbrauch beim Drucken mit der Druckplatte auf einen gegebenen Bedruckstoff 11 rechentechnisch ermittelt werden. Aus dem Farbverbrauch kann die benötigte Trocknerleistung der Trockner 10 zum Trocknen der Farbe auf dem Bedruckstoff rechentechnisch ermittelt werden. Ausgehend von dem berechneten, zu erwartenden Farbverbrauch kann auch ein bereitzustellender Farbvorrat berechnet werden.

In allen dargestellten Ausführungsformen und deren genannten Alternativen kann auch ein so genanntes Kanalschlagmuster berücksichtigt werden. Ein Kanalschlagmuster ist eine beim betriebsmäßigen Rotieren der Druckplatte 5 periodisch auftretende Störung, welche durch eine - meist in axialer Richtung sich erstreckende - seitenbreite oder wenigstens störend breite Lücke bzw. Kanal im Druckbild, d.h. einen störend großen Bereich ohne Druckpunkte, oder einen sonstigen axialen Kanal hervorgerufen wird. Durch solche Kanäle oder deren Kanalschlagmuster kann die Druckqualität beeinträchtigt werden, da sich die am Drucken beteiligten Zylinder durch die Kissprint-Anstellung im beim Rotieren wiederkehrenden Bereich des Kanals und somit rhythmisch annähern und abstoßen. Dies kann im ungünstigen Fall zu ungewollten Dichteschwankungen oder sogar Druckaussetzern führen. Ein vorhandenes Kanalschlagmuster kann bevorzugt mittels CIS-Messeinrichtung 43 (z.B. der oben erwähnte schwenkbare oder bewegbare Spiegel zusammen mit den Flächenkameras) oder mittels einer Flächenkamera erfasst und rechentechnisch ausgewertet und bei der betriebsmäßig erforderlichen Druckzustellung kompensiert werden. Zum Beispiel kann auf Basis des erfassten Kanalschlagmusters vorausberechnet werden, bei welchen Geschwindigkeiten bzw. Rotationsfrequenzen einer Druckmaschine Schwingungen oder Vibrationen auftreten würden. Diese Geschwindigkeiten bzw. Rotationsfrequenzen werden dann während der Produktion nicht verwendet und z.B. beim Hochfahren der Maschine überfahren.

Jede Druckplatte 5 kann ein individuelles Kanalschlagmuster aufweisen. Kanäle in der Druckform können das Druckergebnis negativ beeinflussen oder gar zu Druckaussetzern führen. Um Kanalschläge zu mildern oder gar zu eliminieren, wird die Druckplatte auf Kanäle in Abrollrichtung untersucht. Bei bekannten Resonanzfrequenzen des Druckwerks 9 können Produktions-Geschwindigkeiten berechnet werden, die besonders ungünstig bei gegebener Druckform sind. Diese Druckgeschwindigkeiten gilt es zu vermeiden (so genannte "no go speed").

In allen dargestellten Ausführungsformen und deren genannten Alternativen können auch Registermarken (oder mehrere Registermarken, z.B. Keile, Doppelkeile, Punkte oder Fadenkreuze) auf der Druckform erfasst werden, z.B. unter Einsatz der Kamera 21 oder 43 und einer nachgeschalteten digitalen Bildverarbeitung, und deren Position gemessen, gespeichert und bereitgehaltenen werden. Hierdurch wird eine automatische Einstellung von Registerreglern oder deren Registersensoren auf die Registermarken oder auf axiale Positionen ermöglicht. Fehler durch das sonst übliche händische Einstellen der Sensoren können so vorteilhaft verhindert werden. Alternativ können Muster erfasst werden und zur Konfiguration eines Registerregler verwendet werden. Es kann auch vorgesehen sein, einen motorisch bewegbaren Registersensor automatisch zu positionieren, insbesondere in axialer Richtung. Es kann auch vorgesehen sein, einen vorgegebenen Nullpunkt der Winkelstellung eines Druckzylinder und/oder einer darauf angeordneten Hülse mit einem Winkelwert des tatsächlichen Orts eines (z.B. von Hand aufgeklebten) Druckbilds abzugleichen, insbesondere in Umfangsrichtung (bzw. des Zylinders/der Hülse). Aus diesem Abgleich kann ein optimaler Startwert für die Winkelstellung des Zylinders/der Hülse gewonnen werden. Auf diese Weise kann die Druckproduktion mit reduzierter Registerabweichung gestartet werden. Entsprechendes gilt für die Lateralrichtung (bzw. des Zylinders/der Hülse).

In allen dargestellten Ausführungsformen und deren genannten Alternativen kann auch die Leistung des Trockners 10 der Druckmaschine 8 gesteuert oder geregelt werden. Beispielsweise können LED-Trocknersegmente in Bereichen abgeschaltet werden, in denen keine Druckfarbe auf dem Bedruckstoff übertragen wurde, wodurch eine vorteilhafte Energieeinsparung und Lebensdauerverlängerung der LEDs möglich wird.

Weiter vorteilhaft kann die Leistung des Trockners 10 bzw. die Leistung einzelner Segmente des Trockners für Druckbereiche auf der Druckplatte mit geringer Punktdichte verringert werden. Hierdurch kann Energie eingespart und/oder die Lebensdauer des Trockners oder einzelner Segmente verlängert werden. Das Abschalten oder Verringern kann zum einen bereichsweise und zum anderen in einer Richtung parallel und/oder quer zur axialen Richtung einer Druckplatte bzw. zur lateralen Richtung des damit zu verarbeitenden Bedruckstoffs erfolgen. Zum Beispiel können Segmente oder Module eines Trockners in Bereichen abgeschaltet werden, die Lücken zwischen (z.B. mit Abstand zueinander angeordneten, insbesondere von Hand aufgeklebten) Druckplatten entsprechen.

In allen dargestellten Ausführungsformen und deren genannten Alternativen kann auch der jeweilige Ort (auf der Druckplatte 5) von Messfeldern für Druckinspektionssysteme erfasst und für die weitere Nutzung, z.B. die Ortseinstellung der Druckinspektionssysteme, bereitgestellt werden.

In allen dargestellten Ausführungsformen und deren genannten Alternativen kann auch ein inline-Farbmesssysteme positioniert werden. Um den Ort und damit die Position der Inlinefarbmessung zu bestimmen, wird eine Bild- und/oder Mustererkennung durchgeführt, anhand derer die axiale Position für das Messsystem bestimmt wird. Um eine freie Stelle für die Kalibrierung auf den Bedruckstoff zu ermöglichen, können dem Inline-Farbmesssystem freie Druckstellen mitgeteilt werden.

Im Folgenden soll ein beispielhafter Gesamt-Prozess dargestellt werden, der mit der Vorrichtung in einer passenden Ausführungsform durchgeführt werden kann.

### Messprozess:

Schritt 1: Hülse 3 mit oder ohne Druckplatte 5 wird auf den mit Luft beaufschlagten Trägerzylinder 1 der Messstation 2 über das Luftkissen aufgeschoben und arretiert.
Schritt 2: Die Hülse wird mit einer unikaten Zeichenkette 38 identifiziert. Das kann per Barcode, 2D-Code (z.B. QR-Code oder Datamatrixcode), RFID- Code oder NFC erfolgen.
Schritt 3: Kamera 21 und optional das Referenzobjekt 30 werden gemäß Durchmesser (der Hülse mit oder ohne Druckplatte) positioniert.
Schritt 4: Ermittlung der Topografie 13 der Druckplatte mit Bezugspunkt zur Achse 6 bzw. zum Achsmittelpunkt des Trägerzylinders 22, d.h. der Radien der Erhebungen/Druckpunkte 53 bis 55. Die Lichtquelle 19 und die Kamera 21 der Messeinrichtung 18 bewegen sich dabei ggf. axial und der Trägerzylinder rotiert (seine Winkelstellung ist über einen Encoder bekannt).
Schritt 5: Durchführung eines Flächenscans, um Punktdichten, freie Druckstellen, druckende Flächen, Registermarken und/oder Messfelder für Inline-Farbmessung zu erkennen.
Schritt 6: Anwendung eines auf einem Rechner 39 laufenden Topografie-Algorithmus und Auswertung der Flächen über den Flächen-Scan mit Erkennung von Kanalschlagmustern und mit Registermarkenfeld-Aufbau bzw. Inline-Farbmessung.
Schritt 7: Optionale Ermittlung der Plattenhärte (in der Einheit Shore).
Schritt 8: Anwendung eines Staub-Detektors und/oder eines Härchen-Detektors.
Schritt 9: Speichern der Daten der Messergebnisse in einem digitalen Speicher 40.
Schritt 10: Darstellung der Messergebnisse mit Hinweis auf Staub/Härchen bzw. eingeschlossenen Luftbläschen und/oder Anzeigen von Grenzwerten, wie z.B. Rundlauf, Exzentrizität und/oder Balligkeit.
Schritt 11: Mögliche Messwiederholung oder Entfernen der Hülse, um eine weitere Hülse zu vermessen.

### Rüstprozess:

Schritt 1: Hülse 3 mit Druckplatte 5 wird auf den mit Luft beaufschlagten Druckzylinder 16 der Druckmaschine 8 über das Luftkissen aufgeschoben und arretiert.
Schritt 2: Die Hülse wird mit ihrer unikaten Zeichenkette 38 vom jeweiligen Druckwerk 9 bzw. eines dortigen Sensors identifiziert. Das kann per Barcode, 2D-Code (z.B. QR-Code oder Datamatrixcode), RFID-Code oder NFC erfolgen.
Schritt 3: Druckwerk bzw. Druckmaschine holt sich die gespeicherten Daten zu der zugehörigen identifizierten Hülse.

### Einstell-Prozess:

Schritt 1: Zustellung des so genannten "Kissprints" (Einstellung der Pressung bzw. des Arbeitsdrucks) für Druckzylinder 16 und Rasterzylinder 15 z.B. anhand Topografie, Rundlauf und Bedruckstoffdaten für einen optimalen Druckpunkt. Durchmesser bzw. Radius werden ermittelt. Durchmesser bzw. Radius sind aus Messung bekannt.
Schritt 2: Berechnung des Vorregisters anhand von Registermarken-Daten auf der Druckplatte bzw. Hülsen-Bezugspunkt.
Schritt 3: Einstellung der dynamischen Druckzustellung anhand von ermittelten Punktdichte-Werten und bedruckter Fläche und Geschwindigkeit und optional des Bedruckstoffs. Optionale Berücksichtigung der Plattenhärte (in der Einheit Shore).
Schritt 3: Einstellung der optimalen Materialbahn-Geschwindigkeit z.B. anhand der Berechnung von ermittelten Resonanzfrequenzen des Druckwerks zu Druckplatte durch die Kanalschlagmuster-Erkennung.
Schritt 5: Einstellung der optimalen Trocknungsleistung (UV oder Heißluft) anhand von Punktdichte-Werte und bedruckter Fläche, sowie Rasterzylinder-Daten (Schöpfvolumen etc.) optional dynamisch an die Warenbahngeschwindigkeit angepasst.
Schritt 6: Berechnung des Farbverbrauchs anhand von Punktdichte-Werte und bedruckter Fläche, sowie Rasterzylinder-Daten (Schöpfvolumen etc.).
Schritt 7: Reduzieren oder Ausschalten von LED-UV-Trockner-Sektionen an Stellen, an denen sich eine geringe Punktdichte auf der Druckplatte befindet bzw. an denen keine Trocknung benötigt wird, um auf diese Weise Energie zu sparen und die Lebensdauer der LED-Lampen zu erhöhen.
Schritt 8: Vollautomatische Einstellung des Registerreglers anhand der gewonnen Registermarkendaten, z.B. Markenkonfiguration und automatische, axiale Positionierung des Registersensors.
Schritt 9: Einstellen der Mess-Position für die spektrale Inline-Messung und Druckinspektion der gedruckten Farben, Informationen über Ort bzw. Messposition.

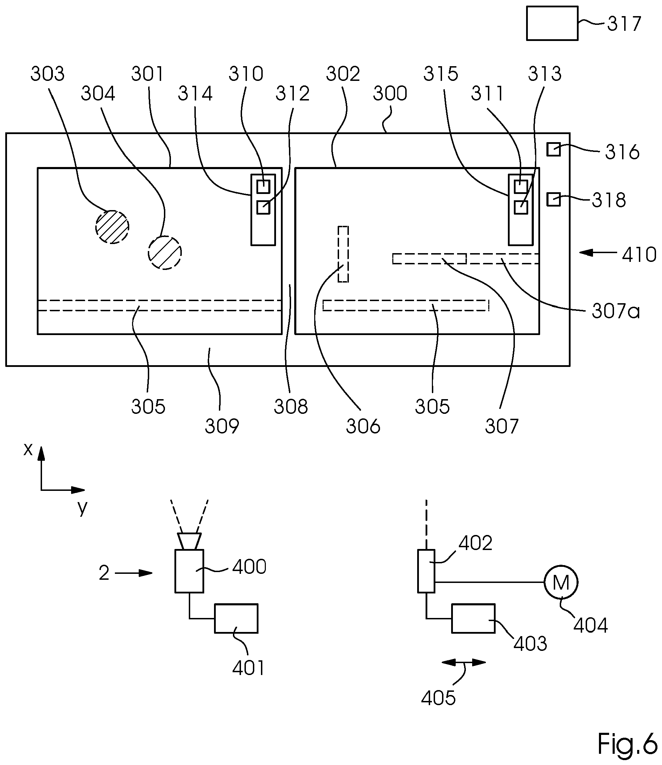

Figur 6 zeigt ein erfasstes Bild 410 einer Hülse 300 und beispielhaft zweier Flexodruckformen 301 und 302. Das Bild ist bevorzugt von einer Kamera 400 erfasst bzw. erzeugt, insbesondere in einer Messstation 2. Das Bild kann an einen Rechner 401 übermittelt werden. Dieser kann der Rechner 39 aus Figur 2a sein. Das Bild kann einer rechentechnischen Bildverarbeitung unterzogen werden. Dabei können Informationen bzw. Daten gewonnen werden. Diese Daten können zu einer ID bzw. zu einem Identifikator 316 der Hülse in einem digitalen Speicher 317 gespeichert und der Flexodruckmaschine beim Einsatz der Hülse unter Nennung der ID zur Verfügung gestellt werden.

Gezeigt ist beispielhaft ein erfasster Bereich 303 hoher Punktdichte und ein erfasster Bereich 304 niedriger Punktdichte. Die Bereiche können bildverarbeitungstechnisch erkannt und separiert und bevorzugt farbig codiert werden. Aus der Kenntnis der lokalen Punktdichten der gesamten Flexodruckform 301 (und der weiteren Flexodruckform 302) kann rechentechnisch ein Voreinstellwert für die sogenannte Druckbeistellung ermittelt werden, d.h. für die Einstellung des Anpressdrucks zwischen Flexodruckzylinder und Gegendruckzylinder (und/oder Rasterwalze) bei Einsatz der Hülse.

Gezeigt ist beispielhaft auch ein erfasster Kanal 305. Im Bereich des Kanals 305 befinden sich keine (oder im Wesentlichen keine) druckenden Erhebungen der Flexodruckform 301, d.h. in diesem Bereich hat die Punktdichte den Wert Null. Der Kanal 305 erstreckt sich primär in axialer y-Richtung und ist aufgrund seiner y-Länge (und x-Breite) kritisch hinsichtlich möglicher Kanalschläge beim Durchlaufen des Druckspaltes und somit hinsichtlich möglicher störender Schwingungen oder Vibrationen beim Betrieb der Flexodruckmaschine (so genanntes "Bouncing"; erzeugt unerwünschte Makulatur). Kritisch sind vor allem Schwingungen im Bereich von Resonanzen. Die ebenfalls beispielhaft gezeigten Lücken 306 und 307 sind aufgrund ihrer Maße und/oder benachbarter/angrenzender druckender Stellen 307a diesbezüglich unkritisch. Ebenso die Lücke 308 zwischen den beiden beabstandet zueinander montierten (z.B. auf die Hülse 300 geklebten) Flexodruckformen 301 und 302. Die Lücke 309 zwischen Vorder- und Hinterkante der Flexodruckform 301 kann jedoch kritisch sein. Eine montierte Druckform kann z.B. nur 60% des Umfangs der Hülse 300 einnehmen, d.h. 40% des Umfangs entsprechen der Lücke 309. Kritische Lücken werden rechentechnisch erkannt und bevorzugt als Kanäle identifiziert.

Gezeigt sind beispielhaft auch eine Registermarke 310 und eine Registermarke 311. Ebenso Farbmessfelder 312 und 313. Im gezeigten Beispiel sind die Marken und Felder in jeweiligen Kontrollstreifen 314 und 315 angeordnet. Die Marken und Felder werden bevorzugt ebenfalls von der Kamera 400 erfasst und per Bildverarbeitung erkannt und separiert. Ihre ermittelten Positionsdaten (x-y-Lokalisierung) werden zur Hülsen-ID 316 gespeichert.

Gezeigt ist beispielhaft auch eine sogenannte Fehlermarke 318 zur Detektion eines Montagefehlers einer Flexodruckform oder mehrerer Flexodruckformen auf der Hülse oder auf mehreren Hülsen. Auch deren Positionsdaten werden zur Hülsen-ID 316 gespeichert.

Figur 6 zeigt auch einen Sensor 402. Der Sensor 402 kann ein Registersensor und/oder ein Spektrometer sein. Dieser ist insbesondere im Flexodruckwerk der Flexodruckmaschine angeordnet und auf die Bedruckstoffbahn 11 gerichtet. Der Sensor ist mit einem Rechner 403 verbunden und ist motorisch (mittels des Motors 404) in axialer y-Richtung 405 bewegbar und dadurch automatisiert positionierbar. Unter Verwendung der aus dem Bild 410 generierten Daten und deren Bereitstellung für die Druckmaschine beim Einsatz der Hülse 300 kann der Sensor entlang des Bedruckstoffs 11 an die y-Position einer zu druckenden und zu erfassenden Marke 310, 311 und / oder der Gleiche oder ein weiterer Sensor in das Feld 312, 313 z. B. zur Farbinspektion mit einem Spektrometer entlang des Bedruckstoff 11 positioniert werden. Die vom Sensor erzeugten Daten leitet dieser an den Rechner 403, welcher mit dem Rechner 401 und/oder mit dem Rechner 39 identisch sein kann.

### Bezugszeichenliste

- 1: Trägerzylinder
- 2: Messstation
- 3: Hülse
- 3a: ID der Hülse
- 4: Klebeband
- 5: Druckplatte bzw. Flexodruckform
- 5a: ID der Druckplatte bzw. Flexodruckform
- 6: Rotationskörper bzw. Flexodruckform
- 7: erster Motor
- 8: Druckmaschine bzw. Flexodruckmaschine
- 9: Druckwerk bzw. Flexodruckwerk
- 10: Trockner
- 11: Bedruckstoff
- 12: Messringe
- 13: Erhebungen/Topografie
- 14: Oberfläche
- 15: Rasterwalze/Rasterzylinder
- 15a: ID der Rasterwalze/des Rasterzylinders
- 16: Druckzylinder
- 17: Gegendruckzylinder/Bedruckstoff-Transportzylinder
- 18: Mess-Einrichtung
- 19: Strahlungsquellen, insbesondere Lichtquellen
- 20: Reflektor bzw. Spiegel
- 21: Strahlungsempfänger, insbesondere Lichtempfänger, z.B. Kameras
- 22: Rotationsachse
- 23: Lichtvorhang/ausgesendetes Licht
- 24: Abschattung
- 25: reflektiertes Licht
- 26: Arbeitsbreite
- 27: axiale Richtung
- 28: Bewegungsrichtung
- 29: zweiter Motor
- 29b: weiterer zweiter Motor
- 30: Referenzobjekt/linienartiges Objekt, insbesondere Faden/Saite/Messer/Balken
- 31: Referenzlinie
- 32: Abstand
- 33: Mantelfläche
- 34: Einheit
- 35: Umfangsrichtung
- 36: Abschattung
- 37: Sensor
- 38: Identifikationsmerkmal bzw. ID
- 39: digitaler Rechner
- 39b: weiterer digitaler Rechner
- 40: digitaler Speicher
- 41: Antriebsseite (AS)
- 42: Bedienseite (BS)
- 43: Einrichtung zum Erfassen der Punktdichte
- 44: Laser-Mikrometer
- 45: dritter Motor
- 46: Messzeile
- 47: Messstreifen
- 48: mehrere Messzeilen
- 50: druckender Bereich
- 51: nicht-druckender Bereich
- 52: einhüllender Radius/Einhüllende
- 53: druckender Punkt der Druckplatte
- 54: gerade noch druckender Punkt der Druckplatte
- 55: nicht-druckender Punkt der Druckplatte
- 56: tiefster Punkt
- 57: radialer Abstand
- 58: Markierungsmittel
- 59: Messfeld zum Messen der Shorehärte
- 60: Motor
- 62: Einrichtung zum Erfassen der ID

- 300: Hülse
- 301: Flexodruckform
- 302: Weitere Flexodruckform
- 303: Bereich hoher Punktdichte
- 304: Bereich niedriger Punktdichte
- 305: Kanal
- 306: Lücke, nicht druckende Stelle
- 307: Lücke, nicht druckende Stelle
- 307a: druckende Stelle
- 308: Lücke zwischen Flexodruckformen
- 309: Lücke
- 310: Registermarke
- 311: Registermarke
- 312: Farbmessfeld
- 313: Farbmessfeld
- 314: Kontrollstreifen
- 315: Kontrollstreifen
- 316: ID
- 317: Speicher
- 318: Fehlermarke

- 400: Kamera
- 401: Rechner
- 402: Sensor
- 403: Rechner
- 404: Motor
- 405: Bewegungsrichtung
- 410: Bild

- R: radialer Abstand
- D: Durchmesser
- x: Richtung (Umfangsrichtung)
- y: Richtung (axiale Richtung)

## Patentansprüche

1. Verfahren zum Betreiben einer Flexodruckmaschine mit wenigstens einer Flexodruckform, mit einem eine Hülse (3) für die Flexodruckform (5) tragenden Druckzylinder (16) oder mit einem Flexodruckzylinder für die Flexodruckform und mit einem Gegendruckzylinder (17), welcher einen Druckspalt mit dem Druckzylinder oder dem Flexodruckzylinder bildet, wobei eine Bahn (11) aus Bedruckstoff im Druckspalt bedruckt und eine Transportgeschwindigkeit der Bahn eingestellt wird,
**dadurch gekennzeichnet,**
**dass** das Einstellen automatisch entweder in Abhängigkeit von einer Punktdichte (303, 304) der Flexodruckform, oder daraus rechentechnisch abgeleiteter Daten, erfolgt oder in Abhängigkeit von Kanälen (305, 306, 307, 307a, 308) der Flexodruckform, des Druckzylinders oder des Flexodruckzylinders, oder daraus rechentechnisch abgeleiteter Daten, erfolgt, wobei die Punktdichte eine ortsabhängige Dichte von druckenden Erhebungen der Flexodruckform ist, und wobei die Punktdichte oder die Kanäle berührungslos gemessen wird/werden oder wobei die Punktdichte aus Vorstufendaten zur Herstellung der Flexodruckform rechentechnisch ermittelt wird.

2. Verfahren nach Anspruch 1,
**dadurch gekennzeichnet,**
**dass** die Punktdichte der Flexodruckform oder die Kanäle vor dem Drucken in einer Messeinrichtung (2, 18, 400) gemessen wird/werden.

3. Verfahren nach Anspruch 2,
**dadurch gekennzeichnet,**
**dass** beim Messen eine Kamera (18, 400) zum Einsatz kommt.

4. Verfahren nach Anspruch 3,
**dadurch gekennzeichnet,**
**dass** beim Messen das gesamte Druckbild einer Flexodruckform, des Druckzylinders oder des Flexodruckzylinders erfasst wird.

5. Verfahren nach einem der vorhergehenden Ansprüche,
**dadurch gekennzeichnet,**
**dass** eine Berechnung von Einstellwerten erfolgt.

6. Verfahren nach Anspruch 5,
**dadurch gekennzeichnet,**
**dass** die Einstellwerte an eine Steuerung eines Motors (60) für das rotative Antreiben des Druckzylinders, des Gegendruckzylinders, und/oder einer Rasterwalze (15) übermittelt werden und/oder dass die Einstellwerte an eine Steuerung eines Motors (60) für das Fördern der Bahn übermittelt werden.

7. Verfahren nach Anspruch 5 oder 6,
**dadurch gekennzeichnet,**
**dass** bei der Berechnung verschiedene Frequenzen für Kanalschläge bei verschiedenen Oberflächengeschwindigkeiten berechnet werden.

8. Verfahren nach Anspruch 5, 6 oder 7,
**dadurch gekennzeichnet,**
**dass** bei der Berechnung Resonanzfrequenzen des Druckzylinders, des Gegendruckzylinders, von Komponenten der Flexodruckmaschine, von Druckwerken der Flexodruckmaschine und/oder von der Flexodruckmaschine verwendet oder ausgeschlossen werden, welche gemessen und/oder vorgegeben werden.

9. Verfahren nach einem der vorhergehenden Ansprüche,
**dadurch gekennzeichnet,**
**dass** beim Betrieb der Flexodruckmaschine mit einer oder mehreren zuvor vermessenen Flexodruckform bzw. Flexodruckformen solche Drehzahlen des Druckzylinders vermieden oder beim Ändern der Drehzahl überfahren oder unterfahren werden, welche infolge wenigstens eines Kanalschlages oder Kanalschlagmusters eines Kanals (305) oder mehrerer Kanäle (305) die Druckqualität störende Resonanzschwingungen erzeugen.

10. Flexodruckmaschine, mit wenigstens einem Flexodruckwerk und mit wenigstens einer Flexodruckform, umfassend einen eine Hülse (3) für die Flexodruckform (5) tragenden Druckzylinder (16) oder einen Flexodruckzylinder für die Flexodruckform, einen Gegendruckzylinder (17), welcher einen Druckspalt mit dem Druckzylinder oder dem Flexodruckzylinder bildet, und eine Rasterwalze (15), wobei die Flexodruckmaschine zum Bedrucken eines Bedruckstoffs (11) mit Flexodruckfarbe nach einem der vorhergehenden Verfahren betrieben wird,
**dadurch gekennzeichnet,**
**dass** die Flexodruckmaschine wenigstens einen Antriebsmotor (60) für das rotative Antreiben des Druckzylinders, des Flexodruckzylinders, des Gegendruckzylinders und/oder einer Rasterwalze (15) umfasst und einen Antriebsmotor (60) für das Fördern der Bahn umfasst-und dass der Antriebsmotor (60) rechentechnisch unter Verwendung der Punktdichte (303, 304), oder daraus abgeleiteter Daten, oder in Abhängigkeit der Kanäle (305, 306, 307, 307a, 308), oder daraus rechentechnisch abgeleiteter Daten, derart gesteuert oder geregt wird, dass die Transportgeschwindigkeit der Bahn einen vorgegebenen Wert oder einen vorgegebenen Wertebereich aufweist oder dass die Transportgeschwindigkeit der Bahn einen vorgegebenen Wert oder einen vorgegebenen Wertebereich ausschließt.

11. Flexodruckmaschine nach Anspruch 10,
**dadurch gekennzeichnet,**
**dass** der Antriebsmotor rechentechnisch unter Verwendung der Punktdichte, oder daraus abgeleiteter Daten, oder in Abhängigkeit von Kanälen der Flexodruckform, des Druckzylinders oder des Flexodruckzylinders, oder daraus rechentechnisch abgeleiteter Daten, derart gesteuert oder geregelt wird, dass die Transportgeschwindigkeit der Bahn einen vorgegebenen Wert oder einen vorgegebenen Wertebereich aufweist oder dass die Transportgeschwindigkeit der Bahn einen vorgegebenen Wert oder einen vorgegebenen Wertebereich ausschließt.

12. Flexodruckmaschine nach Anspruch 10 oder 11,
**dadurch gekennzeichnet,**
**dass** zwischen der Flexodruckform und einer weiteren Flexodruckform ein Kanal gebildet ist.

13. System aus einer Flexodruckmaschine nach Anspruch 10, 11 oder 12 und einer Messeinrichtung (2, 18, 400) zum Messen der Punktdichte der Flexodruckform (5)
**dadurch gekennzeichnet,**
**dass** die Messeinrichtung die Punktdichte der Flexodruckform misst oder Kanäle (305, 306, 307, 307a, 308) der Flexodruckform, des Druckzylinders oder des Flexodruckzylinders misst und dass die Messeinrichtung die Punktdichte oder die Kanäle, oder daraus rechentechnisch abgeleitete Daten, an die Flexodruckmaschine übermittelt.

14. System nach Anspruch 13,
**dadurch gekennzeichnet,**
**dass** die Flexodruckform oder die Hülse mit einer maschinenlesbaren ID (3a, 5a, 38, 316) markiert ist.

15. System nach Anspruch 14,
**dadurch gekennzeichnet,**
**dass** die ID als eindeutiger Identifikator für die Hülse ausgebildet ist.

16. System nach Anspruch 13, 14, oder 15,
**dadurch gekennzeichnet,**
**dass** die Messeinrichtung die Punktdichte oder die Kanäle, oder daraus rechentechnisch abgeleitete Daten, zusammen mit der ID indirekt an die Flexodruckmaschine übermittelt, indem die Punktdichte oder die Kanäle, oder die daraus abgeleiteten Daten, zwischengespeichert und von der Flexodruckmaschine für das Drucken mit der Flexodruckform und/oder der Hülse abgerufen werden.

17. System nach Anspruch 16,
**dadurch gekennzeichnet,**
**dass** die abgeleiteten Daten wenigstens ein Kanalmuster oder eine zu einem Kanalmuster korrespondierende Frequenz umfassen.

## Claims

1. Method for operating a flexographic printing press with at least one flexographic printing form, with a printing cylinder (16) carrying a sleeve (3) for the flexographic printing form (5) or with a flexographic printing cylinder for the flexographic printing form and with an impression cylinder (17) which forms a printing nip with the printing cylinder or the flexographic printing cylinder, wherein a web (11) of printing material is printed in the printing nip and a transport speed of the web is set,
**characterized in that**
the setting is carried out automatically either as a function of a dot density (303, 304) of the flexographic printing form, or of data derived computationally therefrom, or as a function of channels (305, 306, 307, 307a, 308) of the flexographic printing form, of the impression cylinder or of the flexographic printing cylinder, or of data derived computationally therefrom, wherein the dot density is a location-dependent density of printing projections of the flexographic printing form, and wherein the dot density or the channels is/are measured without contact or wherein the dot density is determined computationally from prepress data for producing the flexographic printing form.

2. Method according to claim 1,
**characterized in that**
the dot density of the flexographic printing form or the channels is/are measured in a measuring device (2, 18, 400) before printing.

3. Method according to claim 2,
**characterized in that**
a camera (18, 400) is used for measuring.

4. Method according to claim 3,
**characterized in that**
the entire printed image of a flexographic printing form, the impression cylinder or the flexographic printing cylinder is captured during measurement.

5. Method according one of the preceding claims,
**characterized in that**
a calculation of setting values takes place.

6. Method according to claim 5,
**characterized in that**
the setting values are transmitted to a controller of a motor (60) for the rotary drive of the impression cylinder, the counter cylinder and/or a screen roller (15) and/or **in that** the setting values are transmitted to a controller of a motor (60) for conveying the web.

7. Method according to claim 5 or 6,
**characterized in that**
different frequencies are calculated for channel impacts at different surface speeds.

8. Method according to claim 5, 6 or 7,
**characterized in that**
resonance frequencies of the impression cylinder, the counter cylinder, components of the flexographic printing press, printing units of the flexographic printing press and/or of the flexographic printing press, which are measured and/or specified, are used or excluded in the calculation.

9. Method according one of the preceding claims,
**characterized in that**
during operation of the flexographic printing press with one or more previously measured flexographic printing form or flexographic printing forms, such speeds of the impression cylinder are avoided or, when the speed is changed, are overrun or underrun which, as a result of at least one channel impact or channel impact pattern of one channel (305) or several channels (305), generate resonant vibrations which interfere with the print quality.

10. Flexographic printing press, with at least one flexographic printing unit and with at least one flexographic printing form, comprising a printing cylinder (16) carrying a sleeve (3) for the flexographic printing form (5) or a flexographic printing cylinder for the flexographic printing form, a counter cylinder (17) which forms a printing nip with the impression cylinder or the flexographic printing cylinder, and a screen roller (15), wherein the flexographic printing press is operated for printing a substrate (11) with flexographic printing ink according to one of the preceding methods,
**characterized in that**
the flexographic printing press comprises at least one drive motor (60) for rotationally driving the impression cylinder, the flexographic printing cylinder, the counter cylinder and/or a screen roller (15) and comprises a drive motor (60) for conveying the web, and **in that** the drive motor (60) is controlled or excited computationally using the dot density (303, 304) or data derived therefrom, or as a function of the channels (305, 306, 307, 307a, 308), or data derived computationally therefrom, in such a way that the transport speed of the web has a predetermined value or a predetermined range of values or that the transport speed of the web excludes a predetermined value or a predetermined range of values.

11. Flexographic printing press according to claim 10,
**characterized in that**
the drive motor is controlled or regulated computationally using the dot density, or data derived therefrom, or as a function of channels of the flexographic printing form, the impression cylinder or the flexographic printing cylinder, or data derived computationally therefrom, in such a way that the transport speed of the web has a predetermined value or a predetermined range of values or that the transport speed of the web excludes a predetermined value or a predetermined range of values.

12. Flexographic printing press according to claim 10 or 11,
**characterized in that**
a channel is formed between the flexographic printing form and another flexographic printing form.

13. System comprising a flexographic printing press according to claim 10, 11 or 12 and a measuring device (2, 18, 400) for measuring the dot density of the flexographic printing form (5)
**characterized in that**
the measuring device measures the dot density of the flexographic printing form or measures channels (305, 306, 307, 307a, 308) of the flexographic printing form, the impression cylinder or the flexographic printing cylinder and that the measuring device transmits the dot density or the channels, or data computationally derived therefrom, to the flexographic printing press.

14. System according to claim 13,
**characterized in that**
the flexographic printing form or the sleeve is marked with a machine-readable ID (3a, 5a, 38, 316).

15. System according to claim 14,
**characterized in that**
the ID is designed as a unique identifier for the sleeve.

16. System according to claim 13, 14, or 15,
**characterized in that**
the measuring device indirectly transmits the dot density or the channels, or data derived computationally therefrom, together with the ID to the flexographic printing press by temporarily storing the dot density or the channels, or the data derived therefrom, and retrieving them from the flexographic printing press for printing with the flexographic printing form and/or the sleeve.

17. System according to claim 16,
**characterized in that**
the derived data comprises at least one channel pattern or a frequency corresponding to a channel pattern.

## Revendications

1. Procédé d'exploitation d'une machine à imprimer flexographique avec au moins une forme à imprimer flexographique, avec un cylindre d'impression (16) supportant un manchon (3) pour la forme à imprimer flexographique (5) ou avec un cylindre d'impression flexographique pour la forme à imprimer flexographique et avec un cylindre de contre-pression (17), qui forme une ligne de contact avec le cylindre d'impression ou le cylindre d'impression flexographique, une bande (11) de support d'impression étant imprimée dans la ligne de ligne de contact et une vitesse de transport de la bande étant réglée,
**caractérisé en ce**
**que** le réglage s'effectue automatiquement soit en fonction d'une densité de points (303, 304) de la forme à imprimer flexographique, soit de données dérivées de celle-ci par calcul, soit en fonction de canaux (305, 306, 307, 307a, 308) de la forme à imprimer flexographique, du cylindre d'impression ou du cylindre d'impression flexographique, soit de données dérivées de ceux-ci par calcul, la densité de points étant une densité dépendant de l'emplacement de reliefs imprimants de la forme à imprimer flexographique, et la densité de points ou les canaux étant mesurés sans contact ou la densité de points étant déterminée par calcul à partir de données préliminaires pour la fabrication de la forme à imprimer flexographique.

2. Procédé selon la revendication 1,
**caractérisé en ce**
**que** la densité de points de la forme à imprimer flexographique ou les canaux sont mesurés avant l'impression dans un dispositif de mesure (2, 18, 400).

3. Procédé selon la revendication 2,
**caractérisé en ce**
**qu'**une caméra (18, 400) est utilisée pour la mesure.

4. Procédé selon la revendication 3,
**caractérisé en ce**
**que**, lors de la mesure, la totalité de l'image d'impression d'une forme à imprimer flexographique, du cylindre d'impression ou du cylindre d'impression flexographique est enregistrée.

5. Procédé selon l'une des revendications précédentes,
**caractérisé en ce**
**qu'**il est procédé à un calcul des valeurs de réglage.

6. Procédé selon la revendication 5,
**caractérisé en ce**
**que** les valeurs de réglage sont transmises à une commande d'un moteur (60) pour l'entraînement rotatif du cylindre d'impression, du cylindre de contre-pression, et/ou d'un rouleau tramé (15) et/ou que les valeurs de réglage sont transmises à une commande d'un moteur (60) pour le transport de la bande.

7. Procédé selon la revendication 5 ou 6,
**caractérisé en ce**
**que**, lors du calcul, différentes fréquences sont calculées pour des impacts de canaux à différentes vitesses superficielles.

8. Procédé selon la revendication 5, 6 ou 7,
**caractérisé en ce**
**que**, lors du calcul, on utilise ou on exclut des fréquences de résonance du cylindre d'impression, du cylindre de contre-pression, de composants de la machine à imprimer flexographique, de groupes d'impression de la machine à imprimer flexographique et/ou de la machine à imprimer flexographique, qui sont mesurées et/ou prédéterminées.

9. Procédé selon l'une des revendications précédentes,
**caractérisé en ce**
**que**, lors du fonctionnement de la machine à imprimer flexographique avec une ou plusieurs formes à imprimer flexographiques préalablement calibrées, on évite des vitesses de rotation du cylindre d'impression qui, par suite d'au moins un impact de canal ou d'un profil d'impact de canal d'un canal (305) ou de plusieurs canaux (305), produisent des vibrations de résonance perturbant la qualité d'impression, ou on dépasse ou descend en dessous de telles vitesses de rotation lors de la modification de vitesse de rotation.

10. Machine à imprimer flexographique, avec au moins un groupe d'impression flexographique et avec au moins une forme à imprimer flexographique, comprenant un cylindre d'impression (16) supportant un manchon (3) pour la forme à imprimer flexographique (5) ou un cylindre d'impression flexographique pour la forme à imprimer flexographique, un cylindre de contre-pression (17), qui forme une ligne de contact avec le cylindre d'impression ou le cylindre flexographique, et un rouleau tramé (15), la machine flexographique étant utilisée pour imprimer un matériau d'impression (11) avec une encre flexographique selon l'un des procédés précédents,
**caractérisée en ce**
**que** la machine à imprimer flexographique comprend au moins un moteur d'entraînement (60) pour l'entraînement rotatif du cylindre d'impression, du cylindre flexographique, du cylindre de contre-pression et/ou d'un cylindre tramé (15) et comprend un moteur d'entraînement (60) pour le transport de la bande et **en ce que** le moteur d'entraînement (60) est commandé ou réglé par calcul en utilisant la densité de points (303, 304), ou des données qui en sont dérivées, ou en fonction des canaux (305, 306, 307, 307a, 308), ou des données qui en sont dérivées par calcul, de sorte que la vitesse de transport de la bande présente une valeur prédéterminée ou une plage de valeurs prédéterminée ou que la vitesse de transport de la bande exclut une valeur prédéterminée ou une plage de valeurs prédéterminée.

11. Machine à imprimer flexographique selon la revendication 10,
**caractérisée en ce**
**que** le moteur d'entraînement est commandé ou réglé par calcul en utilisant la densité de points, ou des données qui en sont dérivées, ou en fonction de canaux de la forme à imprimer flexographique, du cylindre d'impression ou du cylindre d'impression flexographique, ou des données qui en sont dérivées par calcul, de sorte que la vitesse de transport de la bande présente une valeur prédéterminée ou une plage de valeurs prédéterminée ou que la vitesse de transport de la bande exclut une valeur prédéterminée ou une plage de valeurs prédéterminée.

12. Machine à imprimer selon l'une des revendications 10 ou 11,
**caractérisée en ce**
**qu'**un canal est formé entre la forme à imprimer flexographique et une autre forme à imprimer flexographique.

13. Système composé d'une machine à imprimer flexographique selon l'une des revendications 10, 11 ou 12 et d'un dispositif de mesure (2, 18, 400) pour mesurer la densité de points de la forme à imprimer flexographique (5)
**caractérisé en ce**
**que** le dispositif de mesure détermine la densité de points de la forme à imprimer flexographique ou des canaux (305, 306, 307, 307a, 308) de la forme à imprimer flexographique, du cylindre d'impression ou du cylindre d'impression flexographique, et que le dispositif de mesure transmet la densité de points ou les canaux, ou des données qui en sont dérivées, par calcul à la machine à imprimer flexographique.

14. Système selon la revendication 13,
**caractérisé en ce**
**que** la forme à imprimer flexographique ou le manchon est repéré par une ID (3a, 5a, 38, 316) lisible par une machine.

15. Système selon la revendication 14,
**caractérisé en ce**
**que** l'ID constitue un identifiant unique pour le manchon.

16. Système selon la revendication 13, 14 ou 15,
**caractérisé en ce**
**que** le dispositif de mesure transmet la densité de points ou les canaux ou des données qui en sont dérivées par calcul conjointement avec l'ID indirectement à la machine à imprimer flexographique, la densité de points ou les canaux ou les données dérivées étant stockés temporairement et récupérés par la machine à imprimer flexographique pour l'impression avec la forme à imprimer flexographique et/ou le manchon.

17. Système selon la revendication 16,
**caractérisé en ce**
**que** les données dérivées comprennent au moins un modèle de canal ou une fréquence correspondant à un modèle de canal.
